(19) Europäisches Patentamt / European Patent Office / Office européen des brevets

(11) **EP 4 186 847 B1**

(12) **EUROPÄISCHE PATENTSCHRIFT**

(45) Veröffentlichungstag und Bekanntmachung des Hinweises auf die Patenterteilung:
**08.05.2024 Patentblatt 2024/19**

(51) Internationale Patentklassifikation (IPC):
**B66C 13/46** *(2006.01)*    **B66C 13/48** *(2006.01)*
**B66C 19/00** *(2006.01)*

(21) Anmeldenummer: **22209918.6**

(22) Anmeldetag: **28.11.2022**

(52) Gemeinsame Patentklassifikation (CPC):
**B66C 13/46; B66C 13/48; B66C 19/002**

(54) **TRAJEKTORIENPLANUNG MIT FLEXIBLER UMPLANUNGSFUNKTIONALITÄT - GEÄNDERTER ENDPUNKT**

TRAJECTORY PLANNING WITH FLEXIBLE REORDERING FUNCTIONALITY - MODIFIED ENDPOINT

PLANIFICATION DE TRAJECTOIRE AVEC FONCTIONNALITÉ DE REPLANIFICATION FLEXIBLE - POINT D'EXTRÉMITÉ MODIFIÉ

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorität: **30.11.2021 AT 509602021**

(43) Veröffentlichungstag der Anmeldung:
**31.05.2023 Patentblatt 2023/22**

(73) Patentinhaber: **B&R Industrial Automation GmbH 5142 Eggelsberg (AT)**

(72) Erfinder:
• **Stöger, Andreas**
  **5142 Eggelsberg (AT)**
• **Frauscher, Thomas J.**
  **5142 Eggelsberg (AT)**
• **Rams, Hubert**
  **5142 Eggelsberg (AT)**

(74) Vertreter: **Patentanwälte Pinter & Weiss OG Prinz-Eugen-Straße 70 1040 Wien (AT)**

(56) Entgegenhaltungen:
EP-A1- 2 402 280    EP-B1- 3 461 783
US-A1- 2019 177 130

**Beschreibung**

Die gegenständliche Erfindung betrifft ein Verfahren zum Steuern einer Hebeeinrichtung, welche eine Last entlang einer ersten Bewegungsrichtung und entlang einer zweiten Bewegungsrichtung innerhalb eines vorgegebenen Arbeitsbereichs der Hebeeinrichtung gemäß einer vorgegebenen Trajektorie von einem Anfangspunkt zu einem Endpunkt bewegt.

Die Planung geeigneter Trajektorien stellt in den verschiedensten technischen Anwendungen einen oftmals wesentlichen Bestandteil von Betriebs- und Problemlösungskonzepten dar. Unter einer Trajektorie ist hierbei der zeitliche Verlauf der Bewegung eines Körpers entlang einer Bahnkurve, eines Pfades oder eines Weges zu verstehen, was im Fall eines starren Körpers beispielsweise durch den Positionsverlauf seines Schwerpunktes beschrieben werden kann. Die in der Regelungstechnik übliche Verwendung des Begriffs Trajektorie" als zeitlicher (Soll-)Verlauf von Zustands- bzw. Ausgangsgrößen eines zu regelnden (technischen) Systems weicht von dieser Definition zwar ab, stellt aber keinen Widerspruch zu ihr dar. Verlangt ein technisches Problem zum einen die Planung einer Bewegung eines physikalischen Körpers, zum anderen aber ebenso die Umsetzung der geplanten Bewegung, beispielsweise durch eine geeignete Regelung oder (An-)Steuerung von zu diesem Zweck vorgesehenen Antriebselementen, fallen die genannten Bedeutungen des Begriffs "Trajektorie" zusammen, was in vielen Anwendungen und so auch im Rahmen der nachfolgenden Ausführungen der Fall ist.

Eine den obigen Ausführungen entsprechende Trajektorienplanung stellt eine grundlegende Teilaufgabe in der Automatisierung von Fahrzeugen dar, wie von Personen- oder auch Lastkraftwagen. Mit Hilfe von karten- bzw. sensorbasierten Daten werden dabei in vielen Fällen Trajektorien, die in erster Linie die Bewegung eines Fahrzeugs auf einer Straße beschreiben, zunächst geplant und in weiterer Folge als Sollgrößen durch die Regelung / Steuerung des Fahrzeuges umgesetzt. Bei der Umsetzung dieser Vorgehensweise sind neben Komfortaspekten vielfach auch die Realisierbarkeit und Kollisionsfreiheit einer Trajektorie wichtige Kriterien.

Ein anderer Bereich, in dem das Thema Trajektorienplanung große Bedeutung besitzt, ist das Gebiet der Transportlogistik. Unter anderem um die Wirtschaftlichkeit von Logistik-Prozessen zu erhöhen, ist in dieser Sparte ein rascher Güterumschlag gefordert. Daraus ergeben sich insbesondere Forderungen nach raschen Be- und Entladungsvorgängen von Frachtschiffen, sowie nach dementsprechend schnellen Bewegungsvorgängen von zur Be- und Entladung eingesetzten Hebeeinrichtungen. Auch solche Hebeeinrichtungen werden vermehrt automatisiert betrieben, wobei sich Forderungen nach schnellen Bewegungsvorgängen unmittelbar auf die im (automatisierten) Betrieb umzusetzenden Trajektorien niederschlagen.

Hebeeinrichtungen gibt es in den verschiedensten Ausführungsformen, die dementsprechend in den unterschiedlichsten Anwendungsgebieten zum Einsatz kommen. So gibt es Turmkrane, die vorwiegend für den Hoch- und Tiefbau verwendet werden, oder auch Mobilkrane, z.B. für die Montage von Windkraftanlagen. Weiters werden Brückenkrane z.B. als Hallenkrane in Fabrikhallen eingesetzt, oder Portalkrane z.B. für die Manipulation von Transportcontainern an Umschlagsorten für den intermodalen Güterumschlag. Zu transportierende Güter werden dabei vorwiegend in standardisierten Containern, sogenannten ISO-Containern, gelagert, welche gleichermaßen für die Transport-Modi Straße, Schiene, Wasser geeignet sind. Von einer Hebeeinrichtung zu transportierende Objekte, wie ein Verbund von Containern mit darin enthaltenen Gütern, werden nachfolgend insbesondere schlicht als "Last" bzw. "Lasten" bezeichnet.

Der Aufbau und die Funktionsweise insbesondere von Portalkranen ist hinlänglich bekannt und z.B. in der US 2007/0289931 A1 anhand eines "Ship-to-Shore-Krans" (STS-Kran) beschrieben. Ein Portalkran weist eine tragende Struktur bzw. ein Portal auf, auf dem ein Ausleger angeordnet ist. Dabei ist das Portal mit Rädern z.B. auf einem Gleis beweglich angeordnet und kann in einer Richtung bewegt werden. Der Ausleger ist fest mit dem Portal verbunden und weist üblicherweise eine entlang des Auslegers bewegliche Laufkatze auf. Zur Aufnahme einer Last, wie beispielsweise eines ISO-Containers, ist die Laufkatze in der Regel mittels vier Seilen mit einem Lastaufnahmeelement, einem sogenannten Spreader, verbunden. Zur Aufnahme und zur Manipulation eines Containers kann der Spreader mittels Seilwinden gehoben oder gesenkt werden. Der Spreader kann auch an unterschiedlich große Container angepasst werden.

Typischerweise werden Krane von einem Kranführer bedient, der die Bewegung eines Krans üblicherweise von einer Kabine aus steuert. Eine derartige Kabine kann an einem Portal oder an einer beweglichen Laufkatze angeordnet sein. Für eine genaue und kollisionsfreie Manipulation von Lasten sind hierbei hohe Anforderungen an den Kranführer gestellt, weshalb in der Regel eine zumindest einjährige Ausbildungs- bzw. Einschulungszeit nötig ist. Insbesondere das rasche Bewegen von Lasten mit geringen Pendelbewegungen stellt dabei eine höchst komplexe Tätigkeit dar, weshalb zur erfolgreichen Ausübung der Tätigkeit eines Kranführers zusätzlich eine meist mehrjährige Praxis-Erfahrung erforderlich ist. Erschwert wird die Tätigkeit eines Kranführers vielfach durch eine hohe körperliche Belastung, unter anderem aufgrund der geforderten hohen Konzentration in Verbindung mit langem Sitzen mit nach unten geneigtem Blick. Unter anderem aus diesen Gründen ist es ein erklärtes Ziel der Automatisierungstechnik, die komplexen Manipulationsvorgänge einer Hebeeinrichtung zumindest teilweise zu automatisieren und damit für den Kranführer zu vereinfachen. Untrennbar mit dem automatisierten Betrieb von Hebeeinrichtungen verbunden ist dabei die Planung von geeigneten Trajektorien, die von den Hebeeinrichtungen im automatisierten Betrieb umzusetzen sind.

Eine bislang wenig betrachtete, aber zusehends an Bedeutung gewinnende Fragestellung betrifft in diesem Zusammenhang die Umplanung von bereits bestehenden Trajektorien. Ein für die Praxis relevantes Beispiel, in dem das Erfordernis der Trajektorienumplanung vermehrt auftritt, sind die bereits erwähnten STS ("Ship-to-Shore") Krane. Wie erwähnt ist es der primäre Zweck von STS-Kranen, Container von Frachtschiffen zum Weitertransport auf Lastkraftwagen (LKW) oder auf sogenanannte "Automated Guided Vehicles" zu verladen. Dabei tritt häufig der Fall ein, dass ein LKW noch nicht in einem von der Hebeeinrichtung bzw. vom Kran erreichbaren Bereich eingetroffen ist, die Bewegung der Last aus Effizienzgründen aber bereits begonnen werden muss. Die tatsächliche Position eines LKWs zur Lastaufnahme kann aus offensichtlichen Gründen erst nach dessen Eintreffen erfasst und in weiterer Folge berücksichtigt werden. Um die Bewegung eines Containers bzw. einer Last dennoch auch vor Eintreffen des LKWs beginnen zu können, ist es in derartigen Fällen erforderlich, zunächst eine geeignete Zielposition für die Planung einer ersten Trajektorie anzunehmen und die angenommene Zielposition später im Rahmen einer Umplanung an die wahre Zielposition anzupassen.

Ganz grundsätzlich führt die stete Geschwindigkeitszunahme von Transportprozessen vielfach zu Situationen, in denen Trajektorien zunächst unter bestimmten Annahmen geplant werden müssen, um einen Transportprozess möglichst früh starten zu können. Treten getroffene Annahmen, beispielsweise in Bezug auf die Zielposition, in der Folge nicht ein, wird meist eine Umplanung bzw. Änderung einer Trajektorie erforderlich. Obgleich das Thema Trajektorienplanung für Hebeeinrichtungen im Stand der Technik behandelt wird, finden Fragestellungen hinsichtlich einer Trajektorienumplanung bislang kaum Erwähnung in der einschlägigen Literatur.

So beschreibt die EP 3461783 B1 die Ermittlung einer Trajektorie für die Bewegung einer Last durch eine Hebeeinrichtung. Dazu wird einerseits eine geometrische Bahn, andererseits eine dynamische Bahn berechnet, die in einem weiteren Schritt zur Erzeugung einer Trajektorie kombiniert werden. Ein Nachteil dieser Herangehensweise ist der mit ihr verknüpfte große Rechenaufwand. Eine (echtzeitfähige) Umplanung während des Betriebs einer Hebeeinrichtung ist damit nur eingeschränkt möglich. Die EP 3461783 B1 offenbart ein Verfahren gemäß dem Oberbegriff des unabhängigen Anspruchs 1 und eine Hebeeinrichtung gemäß dem Oberbegriff des unabhängigen Anspruchs 15.

Die CN 111170153 A beschreibt demgegenüber ein Verfahren zur Umplanung einer gegebenen Trajektorie auf Basis von messtechnisch erfassten Hindernissen. Die erforderlichen messtechnischen Voraussetzungen stellen hierbei eine signifikante Erschwernis für die Implementierung dieser Methode dar. Darüber hinaus beschreibt die CN 111170153 A nicht, wie geänderte Endpunkte berücksichtigt werden können, und trifft überdies keine Aussagen zur Echtzeitfähigkeit des beschriebenen Verfahrens.

Daneben zeigt der bekannte Stand der Technik eine Vielzahl weiterer Nachteile, wie die üblicherweise gegebene Notwendigkeit, dass sich durch eine Umplanung keine Richtungsänderungen entlang der vorgegebenen Bewegungsrichtungen ergeben dürfen. Ein weiterer wesentlicher Punkt ist die Echtzeitfähigkeit von Konzepten zur Trajektorienumplanung. Da die beschriebenen Umplanungen üblicherweise während des Betriebs einer Hebeeinrichtung vorgenommen werden müssen, darf der mit einer Umplanung verknüpfte Rechenaufwand den Betrieb einer Hebeeinrichtung nicht beeinträchtigen. Auch dieser Aspekt wird im Stand der Technik nicht berücksichtigt.

Es ist demnach eine Aufgabe der gegenständlichen Erfindung, ein verbessertes Verfahren zur Trajektorienumplanung für eine Hebeeinrichtung anzugeben, welches eine effiziente Umplanung einer Trajektorie, entlang derer eine Last bewegt wird, unter Berücksichtigung eines veränderlichen Endpunktes ermöglicht.

Diese Aufgabe wird durch die gegenständliche Erfindung gelöst. Dabei wird von einer Hebeeinrichtung ausgegangen, welche eine Last entlang einer ersten Bewegungsrichtung und entlang einer zweiten Bewegungsrichtung innerhalb eines vorgegebenen Arbeitsbereichs der Hebeeinrichtung gemäß einer vorgegebenen Trajektorie von einem Anfangspunkt zu einem Endpunkt bewegt.

Erfindungsgemäß wird für diese Hebeeinrichtung zu einem Kommandozeitpunkt während der Bewegung der Last der Endpunkt zu einem neuen Endpunkt verändert, wobei unter Berücksichtigung von vorgegebenen kinematischen Beschränkungen der Hebeeinrichtung für die erste Bewegungsrichtung und für die zweite Bewegungsrichtung jeweils eine Einzelbewegung geplant wird, welche die weitere Bewegung der Last entlang der jeweiligen Bewegungsrichtung ab dem Kommandozeitpunkt festlegt, wobei die Einzelbewegungen jeweils in einer Projektion des veränderten Endpunktes auf die jeweilige Bewegungsrichtung enden, und wobei die geplanten Einzelbewegungen entsprechend einer vorgegebenen Bewegungsabfolge ausgeführt werden, um die Last entlang der ersten Bewegungsrichtung und entlang der zweiten Bewegungsrichtung gemäß einer sich aus der Bewegungsabfolge der geplanten Einzelbewegungen ergebenden Umplanungstrajektorie weiterzubewegen. Durch die Planung von Einzelbewegungen wird hierbei die numerische Komplexität im Vergleich zu aus dem Stand der Technik bekannten Verfahren signifikant reduziert, wodurch eine effiziente und flexible Umplanung auch während des Betriebs einer Hebeeinrichtung möglich wird.

In einer vorteilhaften Weise werden die für die erste Bewegungsrichtung und die für die zweite Bewegungsrichtung geplanten Einzelbewegungen als voneinander unabhängige Einzelbewegungen geplant, wodurch keine gegenseitigen Abhängigkeiten berücksichtigt werden müssen und die eigentliche Umplanungsaufgabe noch weiter vereinfacht werden kann.

In einer weiteren vorteilhaften Ausführungsform der gegenständlichen Erfindung werden die durch die geplanten Einzelbewegungen vorgegebenen Positionsverläufe der Last als zeitlich zumindest vierfach stetig differenzierbare Positionsverläufe vorgegeben. Dadurch können in einer bemerkenswerten Weise Schwingungen der bewegten Last prinzipbedingt vermieden werden.

In einer weiteren vorteilhaften Ausführungsform der gegenständlichen Erfindung werden die durch die Einzelbewegungen vorgegebenen Positionsverläufe zur Erzeugung der zeitlich zumindest vierfach stetigen Differenzierbarkeit mittels eines Filters mit einer vorgebbaren Zeitkonstante gefiltert. Dadurch kann in einer besonders vorteilhaften Weise dafür Sorge getragen werden kann, dass vorgegebene kinematische Beschränkungen der Hebeeinrichtung eingehalten werden. Die Zeitkonstante des Filters kann hierbei in einer vorteilhaften Weise von der Geometrie der Hebeeinrichtung abhängig gemacht werden, um eine präzise Abstimmung auf die gegebene Hebeeinrichtung zu ermöglichen.

In einer weiteren vorteilhaften Ausführungsform der gegenständlichen Erfindung wird im Fall eines Hindernisses, welches zwischen der zum Kommandozeitpunkt von der Last angenommenen Position und dem neuen Endpunkt angeordnet ist, für die zweite Bewegungsrichtung eine zweite Einzelbewegung geplant, um die Last um das Hindernis zu bewegen. Hierbei ist zu beachten, dass es zum Umfahren eines Hindernisses üblicherweise erforderlich ist, die zum Umfahren geplante Einzelbewegung mit entlang der anderen Bewegungsrichtungen geplanten, anderen Einzelbewegungen zu kombinieren, also Horizontal- und Vertikalbewegungen geeignet miteinander zu kombinieren. Hierbei kann es erforderlich sein, die neue Einzelbewegung auf gegebenenfalls bereits bestehende, andere Einzelbewegungen abzustimmen bzw. anzupassen. Auf die beschriebene Weise kann die Last um das Hindernis bewegt werden und es können Kollisionen der Last mit dem vorgegebenen Hindernis vermieden werden.

In einer weiteren vorteilhaften Ausführungsform der gegenständlichen Erfindung wird durch die genannte Bewegungsabfolge ein abwechselnder Beginn und gegebenenfalls eine überlappende Ausführung der geplanten Einzelbewegungen entlang der ersten Bewegungsrichtung und von Einzelbewegungen entlang der zweiten Bewegungsrichtung vorgesehen, wodurch einerseits Hindernissen ausgewichen werden kann, andererseits in einem teils signifikanten Maß Zeit eingespart werden kann.

Weiters erlaubt das erfindungsgemäße Verfahren vor der Ausführung zumindest einer geplanten Einzelbewegung die Überprüfung, ob die zu erwartende Umplanungstrajektorie zu einer Kollision der Last mit einem im Arbeitsbereich vorgegebenen Hindernis führt. Diese Überprüfung kann dabei in einer vorteilhaften Weise durchgeführt werden, indem die Kollisionszeitpunkte verglichen werden, an denen die jeweiligen Einzelbewegungen Projektionen auf die entsprechende Bewegungsrichtung eines vom vorgegebenen Hindernis abgeleiteten Stützpunktes erreichen, wobei zur Ermittlung dieser Kollisionszeitpunkte, an denen die jeweiligen Einzelbewegungen Projektionen auf die entsprechende Bewegungsrichtung eines vom vorgegebenen Hindernis abgeleiteten Stützpunktes erreichen, ein numerisches Verfahren zur Nullstellensuche herangezogen werden kann. Auf diese Weise können Hindernisse im Arbeitsbereich der Hebeeinrichtung bei der erfindungsgemäßen Umplanung eingebunden werden, und rechtzeitig auf mögliche Kollisionen reagiert werden. Hierbei ist zu anzumerken, dass durch die erfindungsgemäße Vorgehensweise die beschriebene Überprüfung in einer besonders effizienten Weise durchgeführt werden kann.

Wird durch die beschriebene Vorwegrechnung eine mögliche Kollision erkannt, kann zumindest eine Einzelbewegung nicht durchgeführt werden und stattdessen entlang jener Bewegungsrichtung, für welche die zumindest eine nicht durchgeführte Einzelbewegung geplant worden ist, für zumindest die Dauer einer vorgegebenen Minimalbremszeit ein vorgegebener Bremsvorgang durchgeführt werden. So können einerseits auf eine vorteilhafte Weise Kollisionen vermieden werden, andererseits wird auf die beschriebene Weise eine neue Ausgangssituation geschaffen, von der weg eine erneute Umplanung von Einzelbewegungen möglich gemacht wird.

Entsprechend den vorangegangenen Ausführungen kann in einer vorteilhaften Weise anstelle der zumindest einen nicht durchgeführten Einzelbewegung für die entsprechende Bewegungsrichtung eine neue Einzelbewegung geplant werden, wobei eine durch die zumindest eine neue Einzelbewegung zu erwartende Umplanungstrajektorie ermittelt wird und überprüft wird, ob die zu erwartende Umplanungstrajektorie zu einer Kollision der Last mit einem im Arbeitsbereich vorgegebenen Hindernis führt, und wobei die neue Einzelbewegung ausgeführt wird, wenn keine Kollision erkannt wird, oder der vorgegebene Bremsvorgang für zumindest eine weitere Minimalbremszeit fortgesetzt wird und erneut eine Neuplanung einer Einzelbewegung sowie eine Überprüfung der Umplanungstrajektorie, welche durch die neu geplante Einzelbewegung zu erwarten ist, durchgeführt wird, falls eine erneute Kollision mit einem Hindernis erkannt wird. Auf diese Weise kann das erfindungsgemäße Verfahren ohne Kollision weitergeführt werden, auch wenn eine erste Umplanung zu einer Kollision geführt hätte und es kann sichergestellt werden, dass es während der gesamten Bewegung der Last zu keiner Kollision der transportieren Last mit Hindernissen kommt.

Weiters kann zur Unterstützung der gegenständlichen Erfindung die Position der Last messtechnisch erfasst werden und die Messung der Position der Last bei der Durchführung der Einzelbewegungen herangezogen werden. Insbesondere bei der regelungstechnischen Umsetzung von geplanten Einzelbewegungen ist die Verwendung von Messdaten üblicherweise besonders vorteilhaft.

Weiters ist darauf hinzuweisen, dass das erfindungsgemäße Verfahren keineswegs auf Bewegungen in der Ebene beschränkt ist, und dass anhand der gegenständlichen Erfindung auch Bewegungen im (dreidimensionalen) Raum geplant werden können. Im Fall von mehr als zwei Dimensionen wirken sich die Eigenschaften der gegenständlichen Erfindungen sogar noch vorteilhafter aus. Die Unabhängigkeit der geplanten Einzelbewegungen ist dabei besonders hervorzuheben, insbesondere da drei voneinander abhängige Koordinaten die bei einer Umplanung zu bewältigende Komplexität - im Vergleich zum bereits herausfordernden 2D-Fall - noch weiter erhöhen würden.

Die gegenständliche Erfindung wird nachfolgend unter Bezugnahme auf die Figuren 1 bis 6 näher erläutert, die beispielhaft, schematisch und nicht einschränkend vorteilhafte Ausgestaltungen der Erfindung zeigen. Dabei zeigt

Fig. 1 eine schematische Darstellung eines Containerkrans mit einer Trajektorie innerhalb eines Arbeitsbereichs des Containerkrans,

Fig. 2a einen möglichen Ablauf des erfindungsgemäßen Verfahrens bei Vorgabe eines geänderten Endpunktes,

Fig. 2b eine Einzelbewegung in X-Richtung,

Fig. 2c eine Einzelbewegung in Y-Richtung,

Fig. 3a eine zeitoptimale Einzelbewegung für eine Bewegungsrichtung,

Fig. 3b ein Blockschaltbild zur Filterung der zu einer Einzelbewegung gehörenden Positions-, Geschwindigkeits- und Beschleunigungsverläufe,

Fig. 4 eine Trajektorie und eine Umplanungstrajektorie innerhalb eines Arbeitsbereichs mit einer Verbotszone,

Fig. 5a Einzelbewegungen in X-Richtung bei Durchführung eines erfindungsgemäßen Bremsvorganges,

Fig. 5b Einzelbewegungen in Y-Richtung bei Durchführung eines erfindungsgemäßen Bremsvorganges,

Fig. 5c resultierende Trajektorien bei Durchführung eines erfindungsgemäßen Bremsvorganges,

Fig. 6 eine Umplanungstrajektorie zur Kollisionsvermeidung bei zwei Hindernissen.

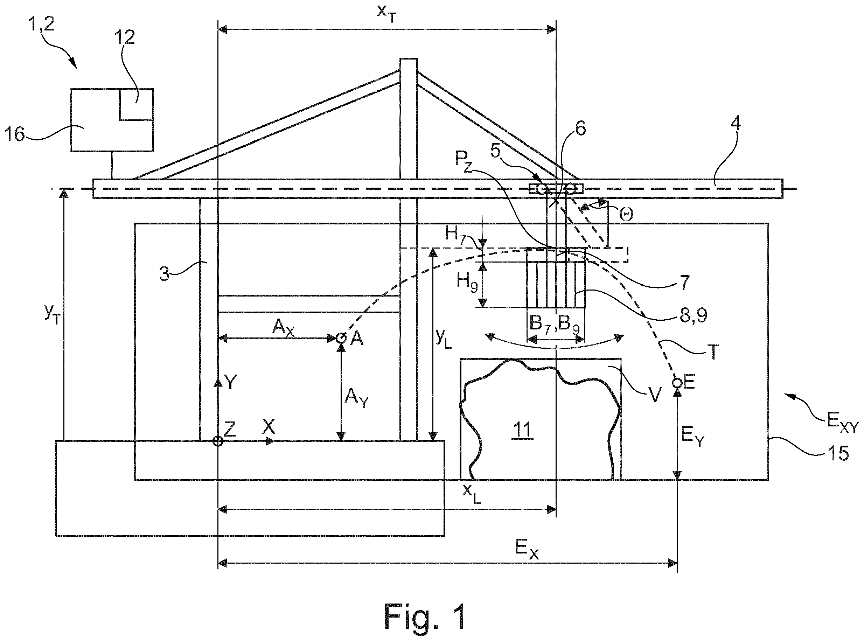

Fig.1 zeigt eine Hebeeinrichtung 1 in Form eines schematischen Containerkrans 2, wie er zum Be- und Entladen von Schiffen in einem Hafen verwendet wird. Üblicherweise weist ein Containerkran 2 eine tragende Struktur 3 auf, die entweder fest oder beweglich am Boden angeordnet ist. Im Fall einer beweglichen Anordnung kann die tragende Struktur 3 beispielsweise in Z-Richtung fahrbar auf Schienen angeordnet sein. Durch diesen Freiheitsgrad in Z-Richtung ist der Containerkran 2 örtlich flexibel einsetzbar. Zur Bewegung der tragenden Struktur 3 in Z-Richtung kann beispielsweise eine geeignete Verschiebeeinrichtung an der Hebeeinrichtung angeordnet sein, z.B. angetriebene Räder, ein Seilzug, ein Zahntrieb oder dergleichen. Die tragende Struktur 3 weist einen Ausleger 4 auf, der in einer bestimmten Höhe $y_T$ fest mit der tragenden Struktur 3 verbunden ist.

Auf diesem Ausleger 4 ist üblicherweise ein Laufelement 5 angeordnet, das in Längsrichtung des Auslegers 4, im dargestellten Beispiel also in X-Richtung, beweglich ist. Dementsprechend kann ein Laufelement 5 mittels Rollen in Führungen gelagert sein. Für das Laufelement 5 ist ein nicht dargestellter Laufelementantrieb vorgesehen, um das Laufelement 5 in X-Richtung zu bewegen. Der Laufelementantrieb kann am Laufelement 5 selbst vorgesehen sein, kann aber auch am Ausleger 4 oder an der tragenden Struktur 3 angeordnet sein. Das Laufelement 5 ist üblicherweise mithilfe von Halteelementen 6 mit einem Lastaufnahmeelement 7 zur Aufnahme einer Last 8 verbunden. Im Falle eines Containerkrans 2 ist die Last 8 üblicherweise ein Container 9, in den meisten Fällen ein ISO-Container mit einer Länge von 20, 40 oder 45 Fuß, einer Breite von 8 Fuß und einer Höhe von 8 Fuß, 6 Zoll.

Die Halteelemente 6 sind üblicherweise als Seile ausgeführt, wobei in den meisten Fällen vier Halteelemente 6 am Laufelement 5 angeordnet sind, es können aber auch mehr oder weniger Halteelemente 6 vorgesehen sein, im einfachsten Fall auch nur ein einzelnes Halteelement 6. Zur Aufnahme einer Last 8, wie z.B. eines Containers 9, ist der Abstand zwischen dem Laufelement 5 und dem Lastaufnahmeelement 7 anhand eines Hubantriebs (nicht dargestellt) verstellbar, in Fig. 1 demnach in Y-Richtung. Wenn die Halteelemente 6 als Seile ausgeführt sind, wird die Hubhöhe üblicherweise mittels einer oder mittels mehrerer Seilwinden verstellt. Der Bereich, in dem eine Hebeeinrichtung 1 eine Last 8 bewegen kann, wird im gegenständlichen Zusammenhang als Arbeitsbereich 15 bezeichnet. Je nach Größe und konstruktiver Ausführung der Hebeeinrichtung 1 kann der Arbeitsbereich 15 variieren.

In der in Fig. 1 gezeigten Situation ist es das Ziel, die Last 8 vom Anfangspunkt A zum Endpunkt E zu bewegen. Beim Beladen eines Schiffes kann der Anfangspunkt A z.B. eine Position eines Containers 9 an Land sein, wie auf einem LKW-Anhänger, einem Bahn-Waggon oder einem Lagerplatz, und die Endposition E kann z.B. eine vorgegebene Position des Containers 9 auf einem Schiff sein. In einer vorteilhaften Weise kann der Arbeitsbereich 15 hierbei in einer Ebene oder auch im gesamten Bewegungsraum festgelegt werden und es kann geprüft werden, ob ein vorgegebener Anfangspunkt A sowie ein vorgegebener Endpunkt E innerhalb des Arbeitsbereichs 15 liegen und ob demnach eine durchgehende Bewegung der Last 8 vom Anfangspunkt A zum Endpunkt E möglich ist.

Um eine Last 8 entlang einer Trajektorie T vom Anfangspunkt A zum Endpunkt E zu bewegen, weist die Hebeeinrichtung 1 eine Kransteuerung 16 mit einer Recheneinheit 12 auf, z.B. in Form einer elektronischen Steuereinheit in Form von geeigneter Hardware und/oder Software, mittels derer die Bewegung der Last 8 entlang der jeweiligen Bewegungsrichtung X, Y, Z gesteuert werden kann. Wird ein Anfangspunkt A und/oder Endpunkt E beispielsweise manuell durch einen Benutzer definiert, kann der Anfangspunkt A und/oder Endpunkt E der Recheneinheit 12 z.B. über eine geeignete Schnittstelle übermittelt werden. Ein Anfangspunkt A und/oder ein Endpunkt E kann auch in der Recheneinheit 12 ermittelt werden. Mögliche Realisierungen einer Recheneinheit 12 sind unter anderem durch mikroprozessorbasierte Hardware, Mikrocontroller und integrierte Schaltungen (ASIC, FPGA) gegeben. Die Kransteuerung 16 kommuniziert zur Bewegungssteuerung und/oder -regelung der Last 8 mit den zu diesem Zweck vorgesehenen Antrieben, wie einem Laufelementantrieb oder einer Seilwinde, und ist üblicherweise so ausgeführt, dass sie die aktuelle Position des Laufelements 5, die Position des Lastaufnahmeelements 7 und gegebenenfalls auch die Position der tragenden Struktur 3 messtechnisch erfassen kann.

In diesem Sinn können in der in Fig. 1 gezeigten Situation die Koordinaten des Zentralpunktes Pz, der an der dem Ausleger 4 zugewandten Oberseite des Lastaufnahmeelements 7 angeordnet ist, in der X-Y-Ebene $E_{XY}$ anhand der Koordinaten $x_L$ und $y_L$ des Lastaufnahmeelements 7 erfasst werden, es können aber auch die Koordinaten $x_T$ und $y_T$ des Laufelements 5 in X- sowie in Y-Richtung erfasst werden. Der Zentralpunkt Pz kann hierbei zur Beschreibung der Position der Last 8 herangezogen werden, und demnach auch als Lastposition aufgefasst werden. Die Position $y_T$ des Laufelements in Y-Richtung ist weiters oftmals durch die konstruktive Höhe der tragenden Struktur 3 bzw. des Auslegers 4 festgelegt und demzufolge konstant. Die Koordinaten sind auf ein gegebenes Koordinatensystem bezogen. Bei einer Bewegung der Last 8 in Z-Richtung, also bei einer Bewegung der tragenden Struktur 3 der Hebeeinrichtung 1 in Z-Richtung, würden ebenso die Position $z_L$ des Lastaufnahmeelements 7 und die Position $z_T$ des Laufelements 5 in Z-Richtung erfasst werden.

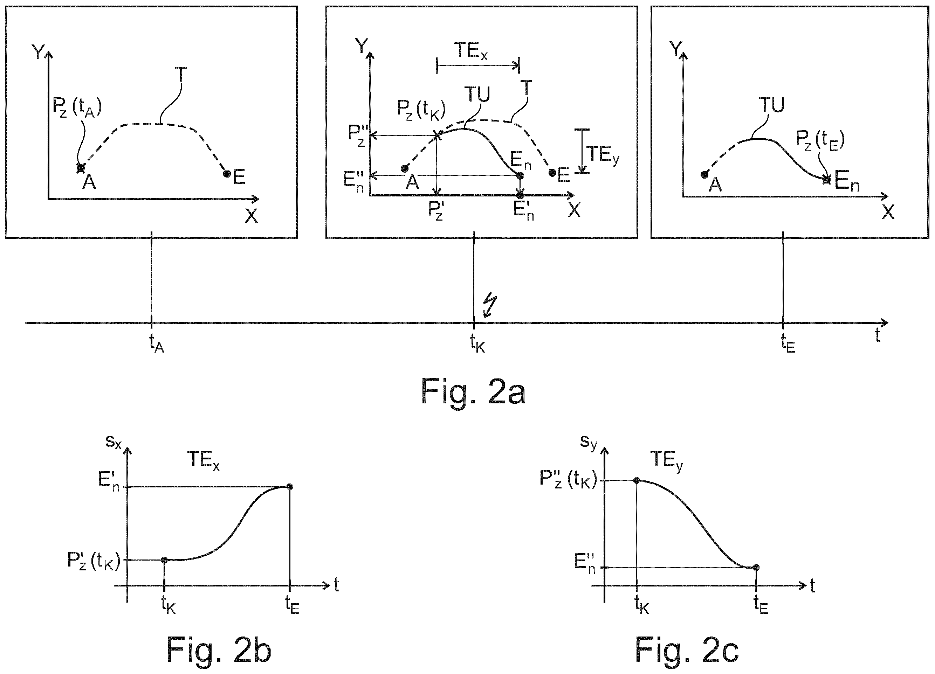

Von einer Trajektorie T, entlang derer die Last 8 bewegt wird, ist üblicherweise eine rasche Überführung der Last 8 vom Anfangspunkt A in den Endpunkt E gefordert. Wie eingangs ausgeführt, kann es während einer solchen Überführung aus mehreren Gründen erforderlich werden, eine vorgegebene Trajektorie T während der Bewegung der Last 8 an sich geänderte Umstände im Bereich der Hebeeinrichtung 1 zu adaptieren, die Trajektorie T also umzuplanen. Dieses Problem wird durch das erfindungsgemäße Verfahren gelöst. Wie das erfindungsgemäße Verfahren zur Umplanung einer Trajektorie T unter Berücksichtigung eines geänderten Endpunktes $E_n$ herangezogen werden kann, ist in den Figuren 2a-2c konkret gezeigt.

Über der Zeitachse t sind hierbei drei Situationen aufgetragen, die bei Anwendung des erfindungsgemäßen Verfahrens während der Bewegung einer Last 8 durch eine Hebeeinrichtung 1 entlang einer ersten und entlang einer zweiten Bewegungsrichtung auftreten können, hier entlang der Bewegungsrichtungen X und Y. In der in Fig. 2a gezeigten Situation beginnt die Bewegung der Last 8 zum Zeitpunkt $t_A$ im Anfangspunkt A. Die Position der Last 8 wird dabei dem zuvor erwähnten Zentralpunkt Pz gleichgesetzt und demnach ebenso mit Pz bezeichnet. Zum Zeitpunkt $t_A$ beginnt die Bewegung der Last 8 entlang der in Fig. 2a strichliert dargestellten, vorgegebenen Trajektorie T, wobei die Position Pz der Last 8 und der Anfangspunkt A zunächst übereinander liegen.

Zum Zeitpunkt $t_k$, nachfolgend auch als Kommandozeitpunkt $t_K$ bezeichnet, wird nun ein neuer Endpunkt $E_n$ vorgegeben, in den die Last 8 anstelle des bisherigen Endpunktes E überführt werden soll. Der Kommandozeitpunkt $t_K$ kann hierbei von einem Bediener wie einem Kranführer vorgegeben und damit weitestgehend frei gewählt werden. Der Kommandozeitpunkt $t_K$ kann aber auch intern in der Recheneinheit 12 generiert werden. Auch sind mehrere, aufeinanderfolgende Kommandozeitpunkte $t_K$ für ein wiederholtes Ändern eines Endpunktes E denkbar. Zum Kommandozeitpunkt $t_K$ befindet sich die Last 8 an der Position $P_z(t_K)$. Erfindungsgemäß wird nach der Vorgabe des neuen Endpunktes $E_n$ unmittelbar mit der Umplanung der Bewegung der Last 8 begonnen. Das erfolgt entsprechend den vorausgegangenen Ausführungen anhand von Projektionen der zum Kommandozeitpunkt $t_K$ von der Last 8 angenommenen Position $P_z(t_K)$ und des neuen Endpunktes $E_n$ auf die Bewegungsrichtungen X, Y. Die Projektionen der zum Kommandozeitpunkt $t_K$ von der Last 8 angenommenen Position $P_z(t_K)$ und des neuen Endpunktes $E_n$ auf die X-Achse werden hierbei als Pz' und $E_n$' bezeichnet, die Projektionen auf die Y-Achse demgegenüber als Pz" und $E_n$".

Erfindungsgemäß werden die Projektionen Pz', $E_n$' bzw. Pz", $E_n$" getrennt voneinander betrachtet. Für jedes der getrennten Paare von Projektionen wird je eine Einzelbewegung TE geplant, um die jeweiligen Projektionen Pz', $E_n$' bzw. Pz", $E_n$" entlang der entsprechenden Bewegungsrichtung X, Y zu verbinden. Eine Einzelbewegung TE legt dabei vorzugsweise einen Positions-, Geschwindigkeits- und Beschleunigungsverlauf entlang der jeweiligen Bewegungsrichtung fest. Auf diese Weise wird beispielsweise die Projektion Pz' der Lastposition Pz mit der Projektion $E_n$' des Endpunktes $E_n$ entlang der Bewegungsrichtung X verbunden. Für jede der Bewegungsrichtungen X, Y ergibt sich so zunächst jeweils eine Einzelbewegung TE.

Nach deren Planung werden die geplanten Einzelbewegungen entsprechend einer vorgegebenen Reihenfolge, nachfolgend "Bewegungsabfolge", ausgeführt, um die Last 8 entlang der ersten Bewegungsrichtung X und entlang der zweiten Bewegungsrichtung Y weiterzubewegen. Aus den geplanten Einzelbewegungen TE ergibt sich so eine Umplanungstrajektorie TU. Die Umplanungstrajektorie TU ist in Fig. 2 durch die durchgezogene Linie dargestellt.

Durch die Auftrennung der neu zu planenden Gesamtbewegung in eine Mehrzahl von stattdessen zu planenden Einzelbewegungen TE wird die zu lösende (Um-)Planungsaufgabe im Vergleich zu aus dem Stand der Technik bekannten Verfahren signifikant vereinfacht. So wird das komplexe Problem der Planung einer zumindest zweidimensionalen Bewegung auf die Planung mehrerer nur noch eindimensionaler Bewegungen reduziert. Gerade dieser Umstand erweist sich in der praktischen Umsetzung als vorteilhaft, da die Planung eindimensionaler Bewegungen ein in der Regelungs- und Automatisierungstechnik bekanntes und bereits auf verschiedene Weisen gelöstes Problem darstellt. Bei der konkreten Planung der Einzelbewegungen TE kann so auf eine Vielzahl von bekannten Ansätzen zurückgegriffen werden. Soll beispielsweise eine zeitoptimale Überführung der Last 8 in den neuen Endpunkt $E_n$ sichergestellt werden, kann unter Verwendung der mittels der gegebenen Antriebe der Hebeeinrichtung 1 realisierbaren, maximalen Beschleunigungen entlang der Bewegungsrichtungen X, Y zum Beispiel der aus der regelungstechnischen Literatur hinlänglich bekannte Bang-Bang-Controller-Ansatz herangezogen werden.

Einzelbewegungen TE, wie sie im Rahmen des erfindungsgemäßen Verfahrens auftreten können, sind in den Figuren 2b und 2c gezeigt. Entsprechend der in Fig. 2b gezeigten Einzelbewegung TEx, in deren Rahmen der Positionsverlauf $s_x$ die Projektion $P_z'(t_k)$ mit der Projektion $E_n'$ verbindet, kann die Planung einer Einzelbewegung TE hinsichtlich ihres zeitlichen Positionsverlaufs $s_x$ beispielsweise durch die Vorgabe eines sigmoiden-ähnlichen Verlaufs erfolgen, was jedoch lediglich beispielhaft zu verstehen ist. Auch andere Positionsverläufe können an dieser Stelle herangezogen werden. Fig. 2c zeigt eine entsprechende Einzelbewegung $TE_Y$ entlang der Y-Richtung, mittels derer die Projektionen $P_z''(t_k)$ und $E_n''$ auf die Y-Richtung verbunden werden.

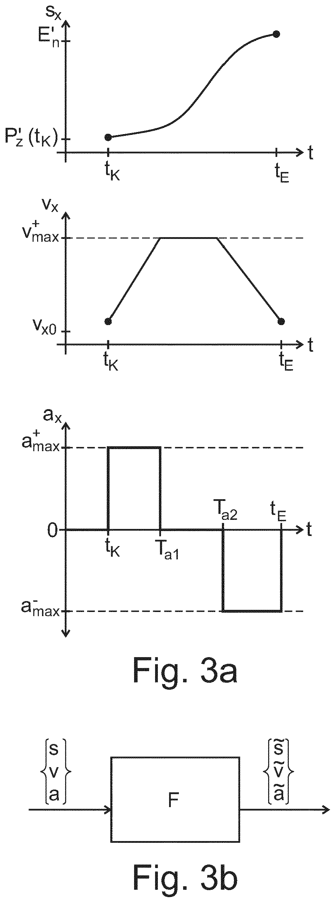

In Fig. 3a wird die Planung einer Einzelbewegung TE anhand einer zeitoptimalen Einzelbewegung zur Verbindung der Projektionen $P_z'$ und $E_n'$ näher erläutert. Dabei sind neben dem Positionsverlauf $s_x$ auch der zugehörige Geschwindigkeitsverlauf $v_x$ und der zugehörige Beschleunigungsverlauf $a_x$ entlang der X-Achse dargestellt. Unter einer zeitoptimalen Einzelbewegung ist im gegenständlichen Zusammenhang eine, im Rahmen der gegebenen dynamischen Limitierungen der Hebeeinrichtung 1, schnellstmögliche Überführung der Last 8 in den neuen Endpunkt $E_n$ zu verstehen. Die wesentlichste dynamische Limitierung sind dabei kinematische Begrenzungen der Antriebe der Hebeeinrichtung 1, wie eine maximale realisierbare Beschleunigung der Antriebe oder eine maximale durch die Antriebe realisierbare Kraft. Aus diesen kinematischen Begrenzungen ergeben sich Begrenzungen für die entlang der jeweiligen Bewegungsrichtungen X, Y realisierbaren Beschleunigungen der Last 8. Die maximal mögliche positive Beschleunigung der Last 8 wird dabei als $a^+_{max}$ bezeichnet, die maximal mögliche negative Beschleunigung der Last 8 als $a^-_{max}$. Eine schnellstmögliche Einzelbewegung TE entlang der X-Achse wird in diesem Sinn unter Ausnützung der maximal möglichen positiven Beschleunigungen $a^+_{max}$ sowie der maximal möglichen negativen Beschleunigungen $a^-_{max}$ entlang der X-Achse erreicht.

Im in Fig. 3a gezeigten Beispiel können der dargestellte Positions-, Geschwindigkeits- und Beschleunigungsverlauf mathematisch als

$$a_x(t) = a^+_{max}\big(\sigma(t - t_k) - \sigma(t - T_{a1})\big) + a^-_{max}\big(\sigma(t - T_{a2}) - \sigma(t - t_E)\big)$$

$$v_x(t) = v_{x0} + a^+_{max}\big(\sigma(t - t_k) - \sigma(t - T_{a1})\big) \cdot (t - t_k) + a^+_{max} \cdot \sigma(t - T_{a1}) \cdot (T_{a1} - t_k)$$
$$+ a^-_{max}\big(\sigma(t - T_{a2}) - \sigma(t - t_E)\big) \cdot (t - T_{a2}) + a^-_{max}\big(\sigma(t - t_E)\big) \cdot (t - T_{a2})$$

$$s_x(t) = P_Z'(t_k) + v_{x0}t + a^+_{max}\big(\sigma(t - t_k) - \sigma(t - T_{a1})\big) \cdot \frac{(t - t_k)^2}{2} + a^+_{max} \cdot \sigma(t - T_{a1})$$
$$\cdot (T_{a1} - t_k) \cdot (t - T_{a1}) + a^-_{max}\big(\sigma(t - T_{a2}) - \sigma(t - t_E)\big) \cdot \frac{(t - T_{a2})^2}{2}$$
$$+ a^-_{max}\big(\sigma(t - t_E)\big) \cdot (T_{a2} - t_E) \cdot (t - t_E)$$

dargestellt werden. Darin steht $\sigma(x)$ für die aus der Mathematik wohlbekannte Sigma-Funktion, die bei Argumenten größer gleich Null ($x \geq 0$) den Wert Eins annimmt, und ansonsten gleich Null ist. $v_{x0}$ steht hierbei für die Anfangsgeschwindigkeit zu Beginn der Einzelbewegung. Demnach kann die Planung von Einzelbewegungen TE, anhand derer ein Positionsverlauf $s_x$, ein Geschwindigkeitsverlauf $v_x$ und ein Beschleunigungsverlauf $a_x$ festgelegt werden, erfolgen, indem wie oben dargestellte Funktionen festgelegt werden, beispielsweise durch die Vorgabe von Zeitpunkten $T_{a1}$ und

$T_{a2}$. In einer vorteilhaften Weise können dazu auch Randbedingungen vorgegeben werden, wie zum Beispiel $s_x(t_E) = E'$, $v_x(t_E) = v_{tE}$. Insbesondere die Geschwindigkeit $v_{tE}$ kann hierbei gleich Null, aber auch verschieden von Null gewählt werden.

Entsprechend den obigen Ausführungen müssen zur Planung einer zeitoptimalen Einzelbewegung TE Beschleunigungsphasen mit maximal positiver Beschleunigung $a^+_{max}$, mit maximal negativer Beschleunigung $a^-_{max}$, sowie mit verschwindender Beschleunigung, also einer Beschleunigung $a_x=0$, vorgegeben werden. In der in Fig. 3a dargestellten Vorgehensweise erfolgt das durch die Vorgabe von Zeitpunkten $T_{a1}$ und $T_{a2}$, welche die genannten Beschleunigungsphasen zeitlich begrenzen. Die mit dem Beschleunigungsverlauf $a_x$ zusammenhängenden Geschwindigkeitsverläufe $v_x$ und Positionsverläufe $s_x$ stellen sich entsprechend den vorgegebenen Beschleunigungsverläufen ein. Die Breiten der durch die Zeitpunkte $T_{a1}$ und $T_{a2}$ begrenzten Beschleunigungsphasen mit von Null verschiedenen Beschleunigungen werden hierbei üblicherweise so vorgegeben, dass die sich ergebenden Geschwindigkeiten vorgegebene Schranken $v^+_{max}$, $v^-_{max}$ nicht überschreiten. Dabei ist anzumerken, dass für die Beschleunigung der Last 8 entlang der Bewegungsrichtungen X, Y auch geringere (konstante) Werte als die aufgrund der kinematischen Begrenzungen der Antriebe möglichen Maximalbeschleunigungen vorgegeben werden können.

Kinematische und/oder geometrische Grenzwerte können beispielsweise in der Recheneinheit 12 hinterlegt sein oder der Recheneinheit 12 vorgegeben werden. Weitere kinematische Grenzwerte sind dabei vorzugsweise eine Maximalgeschwindigkeit $v_{Tmax}$ und/oder eine Maximalbeschleunigung $a_{Tmax}$ des Laufelements 5, oder eine Maximalgeschwindigkeit $v_{Hmax}$ und eine Maximalbeschleunigung $a_{Hmax}$ des Hubantriebs in Y-Richtung. Eine geometrische Begrenzung kann z.B. durch einen maximalen Auslenkwinkel $\Theta_{XYmax}$ des Lastaufnahmeelements 7 in der Ebene $E_{XY}$ gegeben sein. Bei einer dritten Bewegungsrichtung der Hebeeinrichtung in Z-Richtung können zusätzlich eine Maximalgeschwindigkeit $v_{Smax}$ und eine Maximalbeschleunigung $a_{Smax}$ der tragenden Struktur 3 als kinematische Grenzwerte und ein maximaler Auslenkwinkel $\Theta_{ZYmax}$ des Lastaufnahmeelements 7 in der Ebene $E_{ZY}$ als geometrischer Grenzwert vorgegeben werden. Neben der Planung zeitoptimaler Einzelbewegungen TE können aber auch andere Ansätze zur Planung von Einzelbewegungen TE herangezogen werden.

In vielen Fällen erweist es sich in diesem Zusammenhang als vorteilhaft, die Einzelbewegungen $TE_x$, $TE_y$ (und ggf. $TE_z$) entlang der Achsen X, Y (und ggf. Z) voneinander völlig unabhängig zu gestalten. Das bedeutet, dass kein Zusammenhang zwischen den geplanten Einzelbewegungen $TE_x$, $TE_y$ (ggf. $TE_z$) auf den jeweiligen Achsen besteht, der beispielsweise mathematisch ausgedrückt werden könnte und der bei einer Änderung der Position $P_z$ der Last 8 entlang einer ersten Bewegungsrichtung, beispielsweise der X-Achse, eine Änderung der Position Pz der Last 8 auch entlang einer zweiten Bewegungsrichtung, beispielsweise der Y-Achse, bedingen würde.

In anderen Fällen kann wiederum eine bewusste Verknüpfung von Einzelbewegungen TE vorteilhaft oder sogar notwendig sein, beispielsweise wenn bestimmte Bereiche des Arbeitsbereichs 15 der Hebeeinrichtung 1 vermieden werden müssen, z.B. aufgrund eines dort angeordneten Hindernisses 11. In derartigen Fällen darf üblicherweise die Koordinate einer Bewegungsrichtung in Abhängigkeit von der Koordinate einer anderen Bewegungsrichtung nur bestimmte Werte annehmen. Um ein Eindringen der Last 8 in einen verbotenen Bereich im Arbeitsbereich 15 vermeiden zu können, müssen derartige Abhängigkeiten berücksichtigt werden und die Einzelbewegungen demnach abhängig voneinander gestaltet werden.

Die geplanten Einzelbewegungen TE werden in weiterer Folge wie erwähnt entweder gleichzeitig oder zeitlich zueinander versetzt ausgeführt, um die Last 8 in den neuen Endpunkt $E_n$ zu bringen. Ein zeitliches Versetzen von geplanten Einzelbewegungen TE kann insbesondere im oben beschriebenen Fall von verbotenen Bereichen $V_i$ bzw. Hindernissen 11 erforderlich sein. So kann es für das Umfahren eines Hindernisses 11 erforderlich sein, eine Senkbewegung in Y-Richtung erst verzögert zu beginnen. Eine in Y-Richtung geplante Einzelbewegung $TE_Y$ würde demnach erst zeitlich versetzt begonnen werden, nachdem die in X-Richtung geplante Einzelbewegung bereits begonnen worden ist. Die Vorgabe, welche Einzelbewegung TE zuerst und welche Einzelbewegung TE gegebenenfalls erst später auszuführen ist, wird im Rahmen der gegenständlichen Erfindung durch eine sogenannte Bewegungsabfolge zum Ausdruck gebracht, die beispielsweise der Kransteuerung 16 bzw. der in der Kransteuerung 16 vorgesehenen Recheneinheit 12 über eine geeignete Schnittstelle vorgegeben werden kann. Eine Bewegungsabfolge kann so in der Recheneinheit 12 hinterlegt werden. Eine Bewegungsabfolge legt demnach die Reihenfolge fest, in der die geplanten Einzelbewegungen TE auszuführen sind. Eine Bewegungsabfolge kann beispielsweise lauten: "Zuerst Horizontalbewegung in X-Richtung, erst danach Vertikalbewegung in Y-Richtung." Eine Bewegungsabfolge kann auch in Form einer Tabelle vorliegen, in welcher den geplanten Einzelbewegungen TE Startzeitpunkte zugewiesen werden, zu denen diese begonnen werden. Eine Bewegungsabfolge kann auch Zeitintervalle umfassen, welche Wartezeiten festlegen, die zwischen den Startzeitpunkten von aufeinanderfolgenden Einzelbewegungen TE zumindest vorgesehen werden müssen.

Ein zentrales Problem bei der Manipulation von Lasten 8 durch Hebeeinrichtungen 1, welches durch eine geeignete Trajektorienplanung vielfach entweder gelöst, meist aber zumindest stark verringert werden kann, ist das Problem von Lastschwingungen. Vor allem schnelle Bewegungsvorgänge von Hebeeinrichtungen können oftmals unerwünschte Schwingungen und/oder Pendelbewegungen von transportierten Lasten 8 oder von Lastaufnahmeelementen anregen. Schwingungen von Lasten 8 können wiederum Umschlags- und Manipulationsvorgänge verzögern, da Lasten, wie z.B. Container, in derartigen Fällen oft gar nicht oder zumindest nicht ausreichend präzise platziert werden können und erst gewartet werden muss, bis eine gegebene Schwingung wieder abgeklungen ist. In Fig.1 ist die Möglichkeit der Ausbildung von Schwingungen und/oder Pendelbewegungen anhand eines Doppelpfeils in der X-Y-Ebene $E_{XY}$ dargestellt.

Im gegenständlichen Zusammenhang zeigt sich, dass sogenannte flache Trajektorien, also Trajektorien, die in Abhängigkeit vom konkreten Aufbau der Hebeeinrichtung hinreichend oft stetig differenzierbar sind, ein effektives Mittel gegen (Last-)Schwingungen und/oder Pendelbewegungen darstellen. Dieser Herangehensweise liegt der Umstand zugrunde, dass es sich bei einer wie in Fig. 1 gezeigten Hebeeinrichtungen 1 um ein im regelungstechnischen Sinn "flaches System" handelt. Flache Systeme sind bekanntermaßen Systeme, die über einen sogenannten flachen Ausgang verfügen.

Flache Ausgänge und deren Ableitungen erlauben im Fall eines flachen Systems, wie beispielsweise der gegenständlichen Hebeeinrichtung 1, die Darstellung (auch "Parametrierung") der inneren Zustands- bzw. Systemgrößen des flachen Systems. Die inneren Zustands- bzw. Systemgrößen eines flachen Systems können demnach als Funktionen der flachen Ausgänge und deren Ableitungen dargestellt werden, worüber der Fachmann auf dem Gebiet der Regelungstechnik natürlich Bescheid weiß. Für die Unterdrückung von Schwingungen einer von einer Hebeeinrichtung 1 transportierten Last 8 ist an dieser Stelle der Umstand von Bedeutung, dass (in einer idealen Betrachtung) eine mithilfe eines flachen Ausgangs konstruierte Steuerung keine Schwingungen bzw. Pendelbewegungen der Last anregen kann.

Im Fall der gegenständlich betrachteten Hebeeinrichtung 1 stellen die Positionsverläufe der Last 8 entlang der Bewegungsrichtungen X, Y flache Ausgänge des Systems "Hebeeinrichtung" 1 dar. Hierbei zeigt sich, dass es zur Unterdrückung von Schwingungen und/oder Pendelbewegungen ausreichend ist, die durch die geplanten Einzelbewegungen TE festgelegten Positionsverläufe $s_x(t)$, $s_y(t)$ als vierfach stetig zeitlich differenzierbare Positionsverläufe $s_x(t)$, $s_y(t)$ vorzugeben. Auf diese Weise können Schwingungen und/oder Pendelbewegungen unterdrückt werden, ohne auf Messungen der Lastposition Pz angewiesen zu sein. An dieser Stelle sei erwähnt, dass durch die Verwendung von noch öfter stetig differenzierbaren Trajektorien noch ruhigere und für die Antriebe noch schonendere Bewegungsverläufe sichergestellt werden können.

Um sicherzustellen, dass die durch die vorgegebenen Einzelbewegungen TE festgelegten Positionsverläufe $s_x(t)$, $s_y(t)$ tatsächlich vierfach stetig differenzierbar sind, können die Positionsverläufe $s_x(t)$, $s_y(t)$ vor deren Ausführung gefiltert werden. Die beschriebene vierfache Differenzierbarkeit kann jedoch auch auf eine andere Art als durch eine Filterung erreicht werden, beispielsweise durch polynomielle Ansätze für die vorgegebenen Positions-, Geschwindigkeits- und/oder Beschleunigungsverläufe. Die Filterung von Einzelbewegungen TE, die als skalare Verläufe vorliegen, ist hierbei wesentlich einfacher als die Filterung von mehrdimensionalen Verläufen. Auch deshalb stellt die Verwendung von Einzelbewegungen TE einen signifikanten Vorteil bei der Steuerung von Hebeeinrichtungen 1 dar.

Der beschriebene Ansatz zur Erzeugung flacher Trajektorien mittels einer geeigneten Filterung oder eines Polynomansatzes kann in einer besonders vorteilhaften Weise auch dazu eingesetzt werden, die weiter oben genannten kinematischen Begrenzungen für die Antriebe der Hebeeinrichtung sowie die geometrische Begrenzung des Auslenkungswinkels der Last einzuhalten. So stehen die Teilbewegungen der Last 8 über die bekannten Pendelgleichungen beispielsweise mit der Bewegung des Laufelements 5 in Beziehung:

$$x_T = x_L + \frac{\ddot{x}_L(y_T - y_L)}{\ddot{y}_L + g}$$

$$v_T = \dot{x}_L - \frac{\dot{y}_L\ddot{x}_L - (y_T - y_L)\dddot{x}_L}{\ddot{y}_L + g} - \frac{(y_T - y_L)\ddot{x}_L\dddot{y}_L}{(\ddot{y}_L + g)^2}$$

$$a_T = \ddot{x}_L - \frac{\ddot{y}_L\ddot{x}_L + 2\dot{y}_L\dddot{x}_L - (y_T - y_L)x_L^{(4)}}{\ddot{y}_L + g} + \frac{2\dot{y}_L\ddot{x}_L\dddot{y}_L - 2(y_T - y_L)\dddot{x}_L\dddot{y}_L - (y_T - y_L)\ddot{x}_L y_L^{(4)}}{(\ddot{y}_L + g)^2}$$
$$+ \frac{2(y_T - y_L)\ddot{x}_L\ddot{y}_L^2}{(\ddot{y}_L + g)^3}$$

Die Größen $x_T$, $v_T$, $a_T$ stehen hierbei für die Bewegungen des Laufelements 5, $x_L$ und $y_L$ demgegenüber für die Koordinaten der Last 8, deren entsprechende Ableitungen mit $\dot{x}_L$, $\ddot{x}_L$, $\dddot{x}_L$, $x_L^{(4)}$ usw. notiert sind. Entsprechend den obigen Ausführungen stellen die angegebenen Gleichungen eine flache Parametrierung der Zustandsgrößen $x_T$, $v_T$, $a_T$ als Funktion der flachen Ausgänge $x_L$, $y_L$ dar. Der angegebene Zusammenhang verdeutlicht, dass sich Vorgaben hinsichtlich der Verläufe der Koordination $x_L$ und $y_L$ in unmittelbarer Weise auf die Bewegung des Laufelements 5 auswirken.

Um die beschriebene Filterung zur Erzeugung flacher Trajektorien umzusetzen, kann beispielsweise auf ein geeignetes Filter F zurückgegriffen werden, wie ein Moving-Average Filter (MA-Filter, "Gleitender-Mittelwert-Filter"). Eine schematische Darstellung einer solchen Filterung ist in Fig. 3b dargestellt. Fig. 3b zeigt dabei ein allgemeines Filter F, das Positionsverläufe s, Geschwindigkeitsverläufe v und Beschleunigungsverläufe a aufnimmt, und gefilterte Positionsverläufe $\tilde{s}$, Geschwindigkeitsverläufe $\tilde{v}$ und Beschleunigungsverläufe $\tilde{a}$ ausgibt. Das Filter F kann ausgestaltet sein, auch zeitliche Ableitungen der genannten Größen auszugeben, insbesondere von eingehenden Beschleunigungsverläufen. Das Filter F kann dabei als Eingrößensystem ausgeführt sein, und je nur eine der genannten Größen Position s, Geschwindigkeit v und Beschleunigung a aufnehmen und gefiltert wieder ausgeben. Das Filter F kann aber auch als Mehrgrößensystem ausgeführt sein und gleichzeitig mehrere Größen verarbeiten. In bekannter Weise kann das Filter F in der Steuereinheit 12 implementiert sein.

Die Filterzeit $\tau_{filt}$ eines als MA-Filter umgesetzten Filters F kann hierbei in einer besonders vorteilhaften Weise in Abhängigkeit der Geometrie der Hebeeinrichtung 1 und der Pendelgleichungen gewählt werden. Durch die Wahl größerer Zeitkonstanten können die zuvor geplanten Einzelbewegungen noch stärker gefiltert werden und beispielsweise für das Laufelement 5 noch konservativere Verläufe vorgegeben werden. Durch eine mehrmalige Filterung können in einer äußerst vorteilhaften Weise Einzelbewegungen TE erzeugt werden, durch welche für die Antriebe der Hebeeinrichtung 1 vorgegebene kinematische Begrenzungen berücksichtigt werden, wie Geschwindigkeits-, Beschleunigungs-, Ruckbeschränkungen.

Fig.1 zeigt weiters den für die Praxis höchst relevanten Fall, dass zwischen Anfangspunkt A und Endpunkt E ein Hindernis 11 angeordnet ist. Ein Hindernis 11 kann hierbei ein anderes Schiff, ein Stapel aus Containern 9 oder ein sonstiges Hindernis 11 sein. Das Hindernis 11 führt dazu, dass keine direkte Verbindung zwischen dem Anfangspunkt A und dem Endpunkt E, also keine Trajektorie T in Form einer Geraden möglich ist. Wie nachfolgend im Detail gezeigt wird, können Hindernisse 11 vielfach in einer vorteilhaften Weise durch sogenannte Verbotszonen $V_i$, welche die Hindernisse 11 umschließen und welche die Last 8 während ihrer Bewegung vermeiden muss, beispielsweise um eine Kollision zu vermeiden oder ausreichend Sicherheitsabstand zu gewährleisten, berücksichtigt werden (der Index $i \geq 1$ bezieht sich dabei auf die Anzahl der Verbotszonen $V_i$). Eine Verbotszone $V_i$ kann demnach auch merklich größer sein als ein von ihr umfasstes Hindernis 11. In einer vorteilhaften Weise kann eine Trajektorie T entsprechend dem in Fig. 1 anhand der strichlierten Linie gezeigten Verlauf gestaltet werden, also im Wesentlichen einen hinreichend glatten Verlauf zwischen Anfangspunkt A und Endpunkt E aufweisen, und die Verbotszone V dementsprechend umfahren.

Je nach Anwendungsgebiet der Hebeeinrichtung 1 können verschiedene Hindernisse 11 zwischen Anfangspunkt A und Endpunkt E angeordnet sein. Die Anzahl, Art und Ausgestaltung der Hindernisse 11 spielt für die Erfindung nur eine untergeordnete Rolle, es könnte z.B. nur ein einzelnes Hindernis 11 angeordnet sein, oder aber mehrere unterschiedlich große Hindernisse 11, oder auch gar kein Hindernis 11 gegeben sein.

Die Verbotszonen $V_i$, sowie der Anfangspunkt A und der Endpunkt E können entweder manuell durch einen Benutzer z.B. über eine geeignete Schnittstelle in der Recheneinheit 12 definiert werden oder automatisch von der Recheneinheit 12 ermittelt werden. Dazu kann beispielsweise ein geeignetes Laser-Scan Verfahren verwendet werden, das z.B. einen Arbeitsbereich 15 der Hebeeinrichtung 1 abtastet und dabei Hindernisse 11 erkennt, vermisst und die ermittelten Daten an die Recheneinheit 12 weitergibt. Solche Verfahren sind im Stand der Technik bekannt.

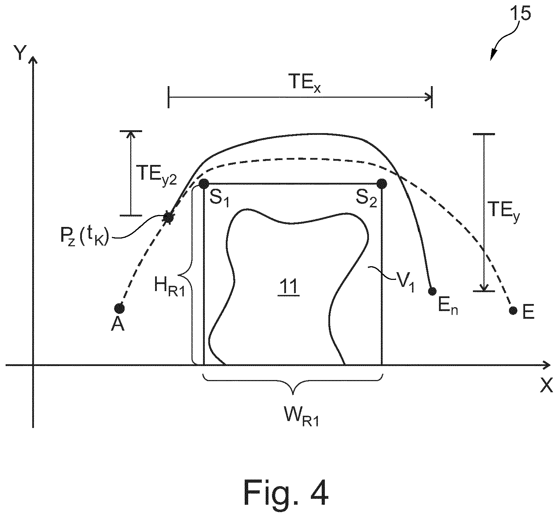

Zur Definition der Verbotszonen $V_i$ kann z.B. eine Umhüllende eines Hindernisses 11 in Form eines Rechtecks verwendet werden, welches das Hindernis 11 vollständig einschließt, wie in Fig. 4 dargestellt. Dabei entspricht die Höhe $H_{R1}$ des Rechtecks zumindest der maximalen Erstreckung des Hindernisses 11 in Y-Richtung und die Breite $W_{R1}$ des Rechtecks zumindest der maximalen Erstreckung des Hindernisses 11 in X-Richtung. Dies ist nur beispielhaft zu verstehen, natürlich sind auch andere geometrische Festlegungen der Verbotszone V, denkbar. Allgemein kann beispielsweise eine einzige verbotenen Zone V, mehrere Hindernisse 11 umschließen. Es kann aber auch eine feinere Definition mehrerer Verbotszonen $V_i$ angewandt werden, z.B. anhand der konkreten Umrisse der Hindernisse 11.

Im Fall eines Hindernisses 11, welches zwischen der zum Kommandozeitpunkt $t_k$ von der Last 8 angenommenen Position Pz und dem neuen Endpunkt $E_n$ angeordnet ist, kann in einer vorteilhaften Weise für die zweite Bewegungsrichtung Y eine zweite Einzelbewegung $TE_{Y2}$ geplant werden, um die Last 8 um das Hindernis 11 herum zu bewegen. In der in Fig. 4 gezeigten Situation sieht diese zweite Einzelbewegung $TE_{Y2}$ einen Hebevorgang vor, der die Last 8 zuerst soweit anhebt, dass eine Kollision mit dem Hindernis 11 ausgeschlossen werden kann.

Entscheidende Bedeutung kommt bei einer wie in Fig. 4 gezeigten Situation der Reihenfolge, in der die geplanten Einzelbewegungen TE ausgeführt werden, zu. Wie anhand von Fig. 4 unmittelbar erkannt werden kann, darf ausgehend vom Kommandozeitpunkt $t_k$ eine Senkbewegung in Y-Richtung durch die Einzelbewegung $TE_Y$ erst dann ausgeführt werden, wenn eine Kollision mit dem Hindernis 11 ausgeschlossen werden kann. Erfindungsgemäß wird dazu eine sogenannte Bewegungsabfolge vorgegeben, die festlegt, in welcher Reihenfolge die vorgegebenen Einzelbewegungen TE auszuführen sind und zu welchen Zeitpunkten diese Einzelbewegungen TE gestartet werden.

Eine erste dahingehende Möglichkeit besteht darin, die geplanten Einzelbewegungen TE zeitlich voneinander beabstandet durchzuführen, also nach der Durchführung einer Einzelbewegungen TE zu warten und erst nach einer vorgegebenen Wartezeit mit der entsprechend der Bewegungsabfolge nächsten Einzelbewegung TE fortzufahren.

Konkret kann eine Bewegungsabfolge beispielsweise festlegen, dass in der in Fig. 4 gezeigten Situation zuerst in Y-Richtung eine Hebebewegung als Einzelbewegung $TE_{Y2}$ durchgeführt wird (englisch "Hoist Up"), danach die vertikale Einzelbewegung $TE_x$ in X-Richtung durchgeführt wird ("Move Trolley"), und erst im Anschluss die Einzelbewegung $TE_{Y1}$ in Y-Richtung als Senkbewegung ("Hoist Down"). Die Wartezeit zwischen diesen Einzelbewegungen $TE_X$, $TE_Y$, $TE_{Y2}$ kann dabei vorgegeben sein oder situationsabhängig bestimmt werden. So kann beispielsweise gewartet werden, bis die Einzelbewegung $TE_{Y2}$ beendet ist, und erst nach deren Beendigung mit der nächsten Einzelbewegung $TE_x$, entweder entlang der gleichen Bewegungsrichtung X, Y oder entlang einer anderen Bewegungsrichtung X, Y, begonnen werden. Auf diese Weise wird jedoch aufgrund der zwischen den verschiedenen Einzelbewegungen $TE_X$, $TE_Y$, $TE_{Y2}$ vorzusehenden Wartezeiten Zeit verloren. In einer vorteilhaften Weise können die geplanten Einzelbewegungen TE aus diesem Grund auch zeitlich überlappend ausgeführt werden. Zeitlich überlappend bedeutet hierbei, dass beispielsweise mit einer Einzelbewegung in Y-Richtung bereits begonnen wird, noch bevor eine Einzelbewegung in X-Richtung vollständig abgeschlossen ist. Auch eine derartige Überlappung von Einzelbewegungen TE kann im Rahmen der gegenständlichen Erfindung in einer Bewegungsabfolge festgehalten werden.

Im Zuge der Festlegung der Bewegungsabfolge, in der die geplanten Einzelbewegungen auszuführen sind, ist es vielfach von besonderem Vorteil, wenn zusätzlich geprüft wird, ob es im Zuge der resultierenden Umplanungstrajektorie TU gegebenenfalls zu einer Kollision der Last 8 mit einer Verbotszone $V_i$ kommen kann.

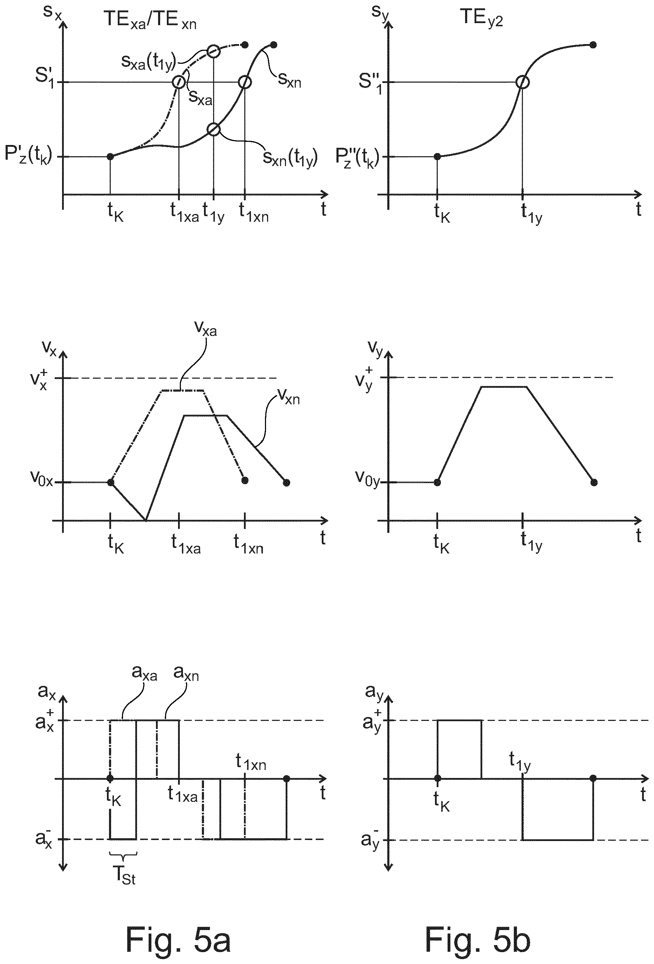

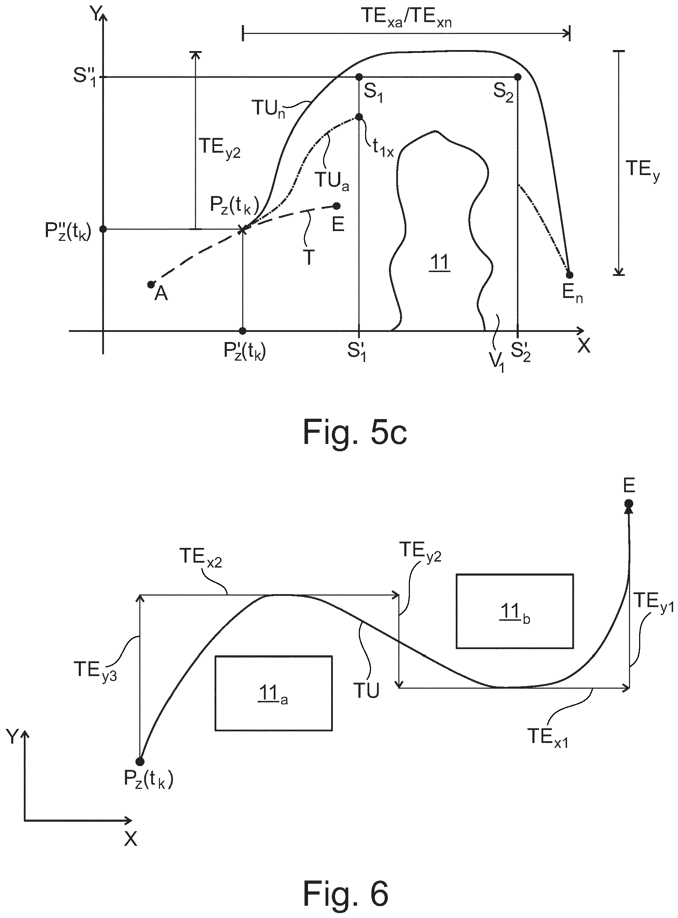

Wie diesbezüglich vorgegangen werden kann, ist in Fig. 5a-5c gezeigt. Fig. 5a und Fig. 5b zeigen dazu einerseits Beschleunigungs-, Geschwindigkeits- und Positionsprofile ($a_x$, $v_x$, $s_x$ und $a_y$ $v_y$, $s_y$) für die Bewegungsrichtungen X und Y, wie sie zur erfindungsgemäßen Umplanung der Bewegung einer Last 8 eingesetzt werden können. In der dargestellten Situation befindet sich die Last 8 zum Kommandozeitpunkt $t_K$ links eines Hindernisses 11, wie in Fig.5c ersichtlich ist. Demnach können die in Y-Richtung geplanten Einzelbewegungen $TE_{Y1}$, $TE_{Y2}$ ohne Einschränkung übernommen werden. Rein durch eine Bewegung in Y-Richtung kann ausgehend von der Position $P_z(t_k)$ keine Kollision herbeigeführt werden.

In X-Richtung zeigt sich allerdings, dass die Einzelbewegung $TE_x$, zu einer Kollision mit dem Hindernis 11 führen würde. Die zu Beginn geplante (nach der Umplanung alten, "a") Einzelbewegung $TE_{Xa}$ ist in Fig.5a durch die strichpunktierten Verläufe $s_{xa}$, $v_{xa}$ und $a_{xa}$ dargestellt. In Kombination mit der für die Y-Richtung geplanten Hebebewegung $TE_{Y2}$ würde sich die in Fig. 5c strichpunktiert gezeigte, erste Umplanungstrajektorie $TU_a$ ergeben, die allerdings zum Kollisionszeitpunkt $t_{1X}$ eine Kollision mit der Verbotszone V zur Folge hätte. Aus diesem Grund wird die für die X-Richtung zunächst geplante Einzelbewegung $TE_{Xa}$ nicht durchgeführt und stattdessen für eine vorgegebene Dauer Tst ein Bremsvorgang ausgeführt. Der Bremsvorgang entspricht der in Fig. 5a zu Beginn vorgesehenen Phase mit negativer Beschleunigung. Darauf aufbauend wird eine neue Einzelbewegung $TE_{Xn}$ in X-Richtung geplant und diese wird anstelle der zuvor geplanten, alten Einzelbewegung $TE_{Xa}$ nach Ende des Bremsvorganges durchgeführt.

Auf eine besonders elegante Art und Weise kann eine Überprüfung, ob eine Kollision mit einem Hindernis zu erwarten ist, auf folgende Weise durchgeführt werden: Vor der Ausführung zumindest einer geplanten Einzelbewegung TE werden sogenannte Kollisionszeitpunkte $t_{iX}$, $t_{iY}$ ermittelt und miteinander verglichen. Unter den Kollisionszeitpunkten $t_{iX}$, $t_{iY}$ sind dabei die jeweiligen Zeitpunkte zu verstehen, zu denen die Last 8 mittels der jeweiligen geplanten Einzelbewegungen $TE_x$, $TE_Y$ eine Projektion $S_i'$ bzw.

$S_i''$ eines, von einer um ein Hindernis 11 gelegten Verbotszone $V_i$ abgeleiteten, Stützpunktes $S_i$ (englisch "Keypoints") auf die jeweilige Bewegungsrichtung X, Y erreichen würden.

Bevorzugt sind derartige Stützpunkte $S_i$ beispielsweise die dargestellten Eckpunkte von Verbotszonen $V_i$. Um zu überprüfen, ob eine zu erwartende Umplanungstrajektorie TU zu einer Kollision der Last 8 mit einem im Arbeitsbereich 15 vorgegebenen Hindernis 11 führen würde, kann in der in Fig. 5c dargestellten Situation geprüft werden, ob der entsprechende Kollisionszeitpunkt $t_{1X}$ für die Einzelbewegung $TE_x$, entlang der X-Achse vor dem entsprechenden Kollisionszeitpunkt $t_{1Y}$ für die Einzelbewegung $TE_{Y2}$ entlang der Y-Achse liegt, also $t_{iX} < t_{iY}$ gilt (konkret auf Fig. 5c übertragen würde die Ungleichung $t_{1X} < t_{1Y}$ lauten). In diesem Fall kann in der in Fig. 5c gezeigten Situation auf eine Kollision geschlossen werden. Die entsprechenden Kollisionszeitpunkte $t_{ix}$, $t_{iy}$ sind hierbei in den Figuren 5a und 5b dargestellt.

Bei der beschriebenen Vorgehensweise ist insbesondere auf die Y-Koordinate der Lastposition Pz, also die Projektion Pz" der Lastposition Pz auf die Y-Achse zu achten. Dabei ist zu berücksichtigen, ob die Y-Koordinate $P_Z''$ der Lastposition $P_Z$ zu Beginn einer Einzelbewegung $TE_Y$ in Y-Richtung größer oder kleiner als die Projektion $S_i''$ des in Y-Richtung nächsten Stützpunktes $S_i$ auf die Y-Achse ist. In vielen praktisch relevanten Fällen ist die Lastposition Pz zu Beginn einer neu geplanten Einzelbewegung TE durch die Lastposition Pz zum Kommandozeitpunkt $t_k$, also $P_Z(t_k)$, gegeben. Ist die Projektion $S_i''$ des in Y-Richtung nächsten Stützpunktes $S_i$ auf die Y-Achse kleiner als die Projektion $Pz''$ der Lastposition Pz auf die Y-Achse, ist die Bedingung für eine Kollision genau dann erfüllt, wenn umgekehrt $t_{iY} < t_{iX}$ gilt.

Einzelbewegungen $TE_X$, $TE_Y$ liegen vielfach nicht in analytischer Form vor. In einer vorteilhaften Weise können in solchen Fällen auch numerische Verfahren zur Nullstellensuche zur Bestimmung der Kollisionszeitpunkte $t_{iX}$, $t_{iY}$ herangezogen werden, wie das wohlbekannte Bisektionsverfahren oder das Newton-Verfahren.

In der praktischen Umsetzung ist es hierbei oftmals von Vorteil, sowohl analytische als auch numerische Methoden zu kombinieren, um die gesuchten Kollisionszeitpunkte $t_{iX}$, $t_{iY}$ zu ermitteln. Ein derartiger Fall wird nachfolgend beschrieben. Dabei werden die Beschleunigungsverläufe $a_x$ und $a_y$ zunächst wie beschrieben stückweise konstant vorgegeben. Zu diesen stückweise konstanten Beschleunigungsverläufen $a_x$ und $a_y$ können die zugehörigen Positionsverläufe $s_x$ und $s_y$ leicht analytisch berechnet werden. Für die sich daraus ergebenden analytischen Beschreibungen der Positionsverläufe $s_x(t)$ und $s_y(t)$ können die Kollisionszeitpunkte $t_{iX}$, $t_{iY}$ mit geringem Aufwand berechnet werden, indem z.B. die Nullstellen $t_{x0}$, $t_{y0}$ der Funktionen $f_x(t) = s_x(t)-S_i'$, $f_y(t) = s_y(t)-S_i''$ bestimmt werden. Für diese Nullstellen $t_{x0}$, $t_{y0}$ gilt definitionsgemäß $f_x(t_{x0}) = f_y(t_{y0}) = 0$. Natürlich können in den Formeln $f_x(t)$ und $f_y(t)$ auch die Höhe und Breite der Last 8 berücksichtigt werden, welche üblicherweise durch die Höhe $H_7$ des Lastaufnahmeelements 7 zuzüglich der Höhe $H_9$ eines Containers 9 in Y-Richtung, sowie der halben Breite $B_7$ des Lastaufnahmeelements 7 (entspricht üblicherweise der halben Breite $B_9$ des Containers 9) gegeben sind. Je nachdem ob sich die Last 8 von links, rechts, oben oder unten dem nächsten Stützpunkt $S_i$ nähert, kann beispielsweise die Funktion $f_x(t)$ um die halbe Breite $B_9$ vergrößert oder verkleinert werden.

Werden die Einzelbewegungen TEx, $TE_Y$ gefiltert, beispielsweise mittels eines eingangs beschriebenen MA-Filters, werden insbesondere die Positionsverläufe $s_x(t)$ und $s_y(t)$ zu gefilterten Positionsverläufen $\tilde{s}_x(t)$ und $\tilde{s}_y(t)$ gefiltert. Für solche gefilterten Positionsverläufe $\tilde{s}_x(t)$ und $\tilde{s}_y(t)$ kann nun die Eigenschaft eines MA-Filters ausgenützt werden, dass die aus der oben gezeigten Funktion $f_x(t)$ ermittelten Nullstellen $t_{x0}$, $t_{y0}$ durch eine Filterung um maximal die Filterzeit $\tau_{filt}$ des zur Filterung eingesetzten MA-Filters verschoben werden können. Für den Fall einer zweifachen Filterung kann dementsprechend ein Zeitintervall der Länge $2 \cdot \tau_{filt}$ um die zuvor ermittelten Nullstellen $t_{x0}$, $t_{y0}$ gelegt werden, mit den Nullstellen $t_{x0}$, $t_{y0}$ zu Beginn des Intervalls an der linken Intervallgrenze. In einem solchen Zeitintervall kann nun mittels eines Bisektionsverfahrens nach Nullstellen der Funktionen $\tilde{f}_x(t) = \tilde{s}_x(t) - S_i'$ und $\tilde{f}_y(t) = \tilde{s}_y(t) - S_i''$ gesucht werden. Diese Nullstellen entsprechen dann den gesuchten Kollisionszeitpunkten $t_{iX}$, $t_{iY}$ für die gefilterten Positionsverläufe $\tilde{s}_x(t)$ und $\tilde{s}_y(t)$.

Neben dem beschriebenen Vergleich zweier Kollisionszeitpunkte $t_{iX}$, $t_{iY}$, kann noch ein weiterer Ansatz zur Kollisionsüberprüfung genannt werden. So kann zunächst nur der Kollisionszeitpunkt $t_{iy}$ berechnet werden, der angibt, wann entlang der Y-Achse durch eine geplante Einzelbewegung $TE_Y$ in Y-Richtung eine Projektion eines vorgegebenen Stützpunktes $S_i''$ auf die Y-Achse erreicht wird. Anhand dieses Kollisionszeitpunktes $t_{iy}$ kann weiters die Position $s_x(t_{iy})$ ermittelt werden, welche die zum Kollisionszeitpunkt $t_{iy}$ durch die geplante Einzelbewegung $TE_x$ in X-Richtung vorgegebene Position auf der X-Achse beschreibt.

Die Überprüfung, ob durch geplante Einzelbewegungen TE eine Kollision mit einem Hindernis 11 zu erwarten ist, kann dann erfolgen, indem die Position $s_x(t_{iy})$ mit der Projektion Si' des Stützpunktes Si auf die X-Achse verglichen wird. Im in Fig. 5a-5c konkret gezeigten Fall kann zum Beispiel auf eine Kollision geschlossen werden, wenn eine der Bedingungen $s_x(t_{1y}) > S_1'$ bzw. $s_x(t_{2y}) < S_2'$ erfüllt ist. So kann gegenüber der zuvor beschriebenen Vorgangsweise Rechenzeit eingespart werden, da lediglich ein Kollisionszeitpunkt $t_{iy}$ bestimmt werden muss. Diese Herangehensweise ist in Fig. 5a anhand der Punkte $s_{xa}(t_{1y})$ und $s_{xn}(t_{1y})$ angedeutet. Während $s_{xa}(t_{1y})$ oberhalb der Projektion $S_1'$ liegt (was zu einer Kollision führen würde), liegt $s_{xn}(t_{1y})$ unterhalb der Projektion $S_1'$, mit dem gewünschten Effekt der Kollisionsvermeidung.

Andererseits ist es zur Überprüfung einer Kollision aber ebenso möglich, zunächst den Kollisionszeitpunkt $t_{ix}$ zu ermitteln, anhand dieses Kollisionszeitpunktes $t_{ix}$ die korrespondierende Position auf der Y-Achse $s_y(t_{ix})$ zu bestimmen, und die korrespondierende Position auf der Y-Achse $s_y(t_{ix})$ mit einer Projektion Si'' eines Stützpunktes Si auf die Y-Achse zu vergleichen. Im in Fig. 5a-5c gezeigten Fall wäre in diesem Sinne eine für eine Kollision zu erfüllende Bedingung $s_y(t_{1x}) < S_1''$ (nicht dargestellt).

Konkret wird zur Überprüfung einer möglichen Kollision der Last 8 mit einem Hindernis 11 vor der Ausführung zumindest einer Einzelbewegung TE, im gezeigten Fall der Einzelbewegung TEx, eine wie oben beschriebene Überprüfung, ein sogenannter "Überprüfungsschritt", durchgeführt. Im Überprüfungsschritt wird die durch die zumindest eine geplante Einzelbewegung TEx festgelegte zu erwartende Umplanungstrajektorie TU im Arbeitsbereich 15 ermittelt.

Ergibt eine der oben genannten Vorwegrechnungen, dass eine Kollision zu erwarten ist, wird die für die Kollision ursächliche Einzelbewegung TE nicht durchgeführt und stattdessen entlang jener Bewegungsrichtung X, Y, für welche die zumindest eine nicht durchgeführte Einzelbewegung TE geplant ist, in Fig. 5c die Bewegungsrichtung X, ein vorgegebener Bremsvorgang durchgeführt. Der Bremsvorgang wird dabei zumindest für die Dauer einer vorgegebenen Minimalbremszeit Tst durchgeführt. Nach der Minimalbremszeit Tst wird in einer vorteilhaften Weise in einem Neuplanungsschritt zumindest eine nicht durchgeführte Einzelbewegung TE zu einer neuen Einzelbewegung TE umgeplant. In einem weiteren Überprüfungsschritt mit der zumindest einen neuen Einzelbewegung TE kann erneut überprüft werden, ob die auf Basis der neuen Einzelbewegung TE zu erwartende Umplanungstrajektorie TU zu einer Kollision führt. Wird keine Kollision erkannt, kann die neu geplante Einzelbewegung TE ausgeführt werden. Wird im vorhergehenden Überprüfungsschritt allerdings erneut eine Kollision der Last 8 mit einem Hindernis 11 prädiziert, kann vorteilhafterweise erneut ein vorgegebener Bremsvorgang für zumindest eine weitere Minimalbremszeit Tst durchgeführt werden. Danach können erneut ein Neuplanungsschritt und ein Überprüfungsschritt, der diesem Neuplanungsschritt folgt, durchgeführt werden.

Durch ein wiederholtes Ausführen des oben beschriebenen Bremsvorganges kann die Last 8 auch zur Gänze in den Stillstand gebracht werden. Die weitere Planung von Einzelbewegungen TE findet dann ausgehend vom Stillstand der Last 8 statt. Die Möglichkeit, mittels des erfindungsgemäßen Verfahrens ausgehend vom Stillstand der Last 8 entsprechende Einzelbewegungen TE und damit eine aus diesen Einzelbewegungen TE resultierende Trajektorie zu planen, eröffnet unmittelbar die Option, anhand des erfindungsgemäßen Verfahrens auch grundsätzlich neue Trajektorien T für die Bewegung einer Last 8 zu planen. Befindet sich die Last 8 zu Beginn eines Bewegungsvorganges im Stillstand und ist noch keine Trajektorie für deren Bewegung vom Anfangspunkt A in den Endpunkt E bekannt, kann der Stillstand im Anfangspunkt A als Ende eines mehrfach ausgeführten Bremsvorganges angenommen / vorgegeben werden und durch Anwendung des erfindungsgemäßen Verfahrens eine Trajektorie zur Überführung der Last 8 vom Stillstand im Anfangspunkt A in den Endpunkt E geplant werden.

Ähnlich der zuvor beschriebenen Ermittlung der Kollisionszeitpunkte $t_{ix}$, $t_{iy}$ kann auch für einen Bremsvorgang ein Zeitintervall angegeben werden, in dem die Last 8 vollständig in den Stillstand überführt werden kann. Konkret können für dieses Zeitintervall die Grenzen $t_k$ (Kommandozeitpunkt) und $t_k + T_{TE}$ angegeben werden, wobei $T_{TE}$ die Dauer einer geplanten Einzelbewegung TE beschreibt. Innerhalb dieses Zeitintervalls kommt es bei wiederholter Ausführung eines Bremsvorganges zum Stillstand der Last 8, wobei der konkrete Zeitpunkt wie vorhin durch ein Bisektionsverfahren ermittelt werden kann.

Auch wenn die gegenständliche Erfindung bislang anhand einer Trajektorie T in der X-Y-Ebene $E_{XY}$ beschrieben wurde, ist auch eine Erweiterung auf eine dreidimensionale Trajektorie T im Raum möglich. Das prinzipielle Verfahren zur Umplanung auch von dreidimensionalen Trajektorien T auf Basis von bevorzugt unabhängigen Einzelbewegungen bleibt hierbei unverändert. Wird die Last 8 durch die Hebeeinrichtung 1 zusätzlich entlang einer dritten Bewegungsrichtung Z bewegt, wird zur Umplanung der Trajektorie T entsprechend dem erfindungsgemäßen Verfahren auch für die dritte Bewegungsrichtung Z zumindest eine Einzelbewegung $TE_Z$ geplant, welche gemäß einer vorgegebenen Bewegungsabfolge zusätzlich zu den für die erste Bewegungsrichtung X und für die zweite Bewegungsrichtung Y geplanten Einzelbewegungen TEx, $TE_Y$ ausgeführt wird.

Zur Anwendung der gegenständlichen Erfindung bei der Planung von dreidimensionalen Trajektorien ist es vielfach vorteilhaft, anstelle eines zweidimensionalen Arbeitsbereichs 15 einen 3D-Arbeitsraum zur Beschränkung der Bewegung der Last 8 vorzugeben. Im Gegensatz zu einer rein zweidimensionalen Betrachtung kann es im 3D-Fall allerdings auch erforderlich sein, die Ausdehnung eines Hindernisses 11 sowie die Ausdehnung einer Last 8 in Z-Richtung zu berücksichtigen. Das kann beispielsweise in Montagehallen erforderlich sein, wo an den Wänden angeordnete Hindernisse 11 in den Raum der Montagehalle ragen. In derartigen Fällen können Situationen eintreten, in denen einem Hindernis 11 auch durch geeignete Senkbewegungen ausgewichen werden kann, was durch das erfindungsgemäße Verfahren jedoch ebenso umsetzbar ist.

Ein derartiger Fall ist in Fig. 6 dargestellt, wo wie in den vorhergehenden Beispielen zum Kommandozeitpunkt tk ausgehend von der Position $P_Z(t_k)$ neue Einzelbewegungen $TE_{X1}$, $TE_{X2}$, $TE_{Y1}$, $TE_{Y2}$, $TE_{Y3}$ geplant werden. Dabei ist der wichtige Fall gezeigt, dass auch in X-Richtung mehrere Einzelbewegungen $TE_{X1}$, $TE_{X2}$ geplant werden, was im Rahmen der gegenständlichen Erfindung ebenso möglich ist. In Fig. 6 wird dem Hindernis 11a beispielsweise durch eine Hebebewegung $TE_{Y3}$ ausgewichen und dem Hindernis 11b demgegenüber durch eine Senkbewegung $TE_{Y2}$. Die abschließende Überführung in den Endpunkt E erfolgt mittels einer finalen Hebebewegung $TE_{Y1}$.

In vielen praktischen Anwendungen kann es in diesem Zusammenhang vorteilhaft sein, optische Messsysteme zur Erfassung der Lastposition $P_Z$ oder auch von Hindernissen 11 einzusetzen, wie dies beispielsweise in der EP 3 653 562 A1 beschrieben ist. Als optische Messsysteme sind hierbei insbesondere geeignete Kamerasysteme, aber auch Laserscanner zu nennen. Zum Zweck der Überwachung von bezüglich ihrer Position im Arbeitsbereich 15 veränderlichen Hindernissen 11 kann eine Kamera direkt auf der Laufkatze einer Hebeeinrichtung 1 montiert/installiert sein. Konkret kann eine optische Erfassung von Hindernissen hierbei vielfach Information darüber liefern, wie hoch und an welchen räumlichen Positionen zu umfahrende Hindernisse 11 angeordnet sind. Wird eine Positionsänderung eines Hindernisses 11 erkannt, kann daraus eine neue Verbotszone V abgeleitet werden und wie beschrieben die Umplanung einer Trajektorie für die Bewegung einer Last vorgenommen werden. Neben Kamera- und/oder Laserscansystemen sind auch andere Ansätze zur Erfassung von Hindernissen 11 denkbar. Vielfach bieten auch in Software implementierte Automatisierungs- oder Logistiksysteme Informationen über zu berücksichtigende Hindernisse.

Ein weiterer Anwendungsfall, für den sich das erfindungsgemäße Verfahren zur Trajektorienplanung in einer besonderen Weise eignet, sind sogenannte Schüttgutkrane. Aufgrund des Umstandes, dass in einer vorteilhaften Ausgestaltung des erfindungsgemäßen Verfahrens vierfach differenzierbare, flache Trajektorien geplant werden können, können unerwünschte Lastschwingungen prinzipbedingt ausgeschlossen werden. Bei Schüttgutkranen ist dieses Merkmal von besonderer Bedeutung, da so mögliche Verluste von transportiertem Schüttgut zuverlässig verhindert werden können. Zusätzlich kann durch das Verhindern der Schwingung auch die mechanische Belastung auf Kranstruktur und die Gefahr, die von schwingenden Lasten für Personal ausgeht, effektiv verringert werden. Auf diese Weise kann auf eine bei Schüttgutkranen ansonsten zur Unterdrückung von Lastschwingungen üblicherweise benötigte Positionsmesseinheit verzichtet werden.

Bei Schüttgutkranen ergibt sich überdies eine weitere vorteilhafte Anwendungsmöglichkeit des erfindungsgemäßen Verfahrens. So kann zum Entladen von Schüttgut ein Entladebereich definiert werden, in welchem Schüttgut aus einem Greifer abgeladen werden soll. Unter Anwendung des erfindungsgemäßen Verfahrens kann ein Entladevorgang dann folgendermaßen ausgeführt werden: Zunächst wird vom Anfangspunkt A, an dem der Greifer gefüllt worden ist, zu einem vorgegebenen Endpunkt E im Entladebereich, in dem der Greifer entleert werden soll, eine Trajektorie T geplant. Danach wird während der Bewegung des Greifers vom Anfangspunkt A zum Endpunkt $E_n$ die erfindungsgemäße Umplanungsfunktionalität genutzt, um die Lastbewegung im Entladebereich (Umkehrpunkt) umzukehren. Dies kann erreicht werden, indem ein, bevorzugt in der Nähe des Anfangspunktes A gelegener, neuer Endpunkt $E_n$ vorgegeben wird. So wird verhindert, dass der Greifer, also die Last 8, während des gesamten Entladevorganges zum Stehen kommt und es wird ermöglicht, dass das Entladen des Greifers während der Bewegung vertikal oberhalb des Entladebereichs erfolgen kann. Dadurch wird beim gesamten Bewegungsablauf Zeit eingespart, die ansonsten benötigt wird, um den Greifer im ursprünglichen Endpunkt E zu stoppen und erneut in die Gegenrichtung zu beschleunigen.

## Patentansprüche

1. Verfahren zum Steuern einer Hebeeinrichtung (1), welche eine Last (8) entlang einer ersten Bewegungsrichtung (X) und entlang einer zweiten Bewegungsrichtung (Y) innerhalb eines vorgegebenen Arbeitsbereichs (15) der Hebeeinrichtung (1) gemäß einer vorgegebenen Trajektorie (T) von einem Anfangspunkt (A) zu einem Endpunkt (E) bewegt, **dadurch gekennzeichnet, dass** zu einem Kommandozeitpunkt ($t_k$) während der Bewegung der Last (8) der Endpunkt (E) zu einem neuen Endpunkt ($E_n$) verändert wird, **dass** unter Berücksichtigung von vorgegebenen kinematischen Beschränkungen der Hebeeinrichtung (1) für die erste Bewegungsrichtung (X) und für die zweite Bewegungsrichtung (Y) jeweils eine Einzelbewegung ($TE_X$, $TE_Y$) geplant wird, welche die weitere Bewegung der Last (8) entlang der jeweiligen Bewegungsrichtung (X, Y) ab dem Kommandozeitpunkt ($t_k$) festlegt, wobei die Einzelbewegungen ($TE_X$, $TE_Y$) jeweils in einer Projektion ($E_n'$, $E_n''$) des neuen Endpunktes ($E_n$) auf die jeweilige Bewegungsrichtung (X, Y) enden, **und dass** die geplanten Einzelbewegungen ($TE_X$, $TE_Y$) entsprechend einer vorgegebenen Bewegungsabfolge ausgeführt werden, um die Last (8) entlang der ersten Bewegungsrichtung (X) und entlang der zweiten Bewegungsrichtung (Y) gemäß einer sich aus der Bewegungsabfolge der geplanten Einzelbewegungen ($TE_X$, $TE_Y$) ergebenden Umplanungstrajektorie (TU) weiterzubewegen.

2. Verfahren nach Anspruch 1, **dadurch gekennzeichnet, dass** die für die erste Bewegungsrichtung (X) und die für die zweite Bewegungsrichtung (Y) geplanten Einzelbewegungen ($TE_X$, $TE_Y$) als voneinander unabhängige Einzelbewegungen ($TE_X$, $TE_Y$) geplant werden.

3. Verfahren nach einem der Ansprüche 1 bis 2, **dadurch gekennzeichnet, dass** die geplanten Einzelbewegungen ($TE_X$, $TE_Y$) jeweils einen zeitlich zumindest vierfach stetig differenzierbaren Positionsverlauf ($s_x(t)$, $s_y(t)$) umfassen, wobei die Positionsverläufe ($s_x(t)$, $s_y(t)$) zur Erzeugung der zeitlich zumindest vierfach stetigen Differenzierbarkeit mittels eines Filters (F) mit einer vorgebbaren Zeitkonstante gefiltert werden, wobei die Zeitkonstante des Filters (F) in Abhängigkeit der Geometrie der Hebeeinrichtung (1) gewählt wird, um bei einer kombinierten Ausführung der Einzelbewegungen ($TE_X$, $TE_Y$) die vorgegebenen kinematischen Beschränkungen der Hebeeinrichtung (1) einzuhalten.

4. Verfahren nach einem der Ansprüche 1 bis 3, **dadurch gekennzeichnet, dass** im Fall eines Hindernisses (11), welches zwischen der zum Kommandozeitpunkt ($t_k$) von der Last (8) angenommenen Position (Pz) und dem neuen Endpunkt ($E_n$) angeordnet ist, für die zweite Bewegungsrichtung (Y) eine weitere Einzelbewegung ($TE_{Y2}$) geplant wird, welche die Last (8) in Kombination mit der entlang der ersten Bewegungsrichtung (X) geplanten Einzelbewegung ($TE_X$) um das Hindernis (11) bewegt, **und dass** die zweite Einzelbewegung ($TE_{Y2}$) entsprechend der vorgegebenen Bewegungsabfolge vor der für die zweite Bewegungsrichtung (Y) bereits geplanten Einzelbewegung ($TE_Y$) ausgeführt wird.

5. Verfahren nach einem der vorhergehenden Ansprüche, **dadurch gekennzeichnet, dass** die Bewegungsabfolge so vorgegeben wird, dass Einzelbewegungen ($TE_X$) entlang der ersten Bewegungsrichtung (X) und Einzelbewegungen ($TE_Y$) entlang der zweiten Bewegungsrichtung (Y) abwechselnd begonnen werden.

6. Verfahren nach einem der vorhergehenden Ansprüche, **dadurch gekennzeichnet, dass** die Bewegungsabfolge so vorgegeben wird, dass eine Einzelbewegung ($TE_X$) entlang der ersten Bewegungsrichtung (X) und eine Einzelbewegung ($TE_Y$) entlang der zweiten Bewegungsrichtung (Y) zeitlich überlappend durchgeführt werden.

7. Verfahren nach einem der vorhergehenden Ansprüche, **dadurch gekennzeichnet, dass** vor der Ausführung zumindest einer geplanten Einzelbewegung ($TE_X$, $TE_Y$) überprüft wird, ob die zu erwartende Umplanungstrajektorie (TU) zu einer Kollision der Last (8) mit einem im Arbeitsbereich (15) vorgegebenen Hindernis (11) führt.

8. Verfahren nach Anspruch 7, **dadurch gekennzeichnet, dass** zur Überprüfung, ob die zu erwartende Umplanungstrajektorie (TU) zu einer Kollision der Last (8) mit einem im Arbeitsbereich (15) vorgegebenen Hindernis (11) führt, Projektionen ($S_i'$, $S_i''$) eines vom vorgegebenen Hindernis (11) abgeleiteten Stützpunktes ($S_i$) auf die Bewegungsrichtungen (X, Y) ermittelt werden, **dass** ein Kollisionszeitpunkt ($t_{ix}$) ermittelt wird, zu dem die Last (8) mit der für die erste Bewegungsrichtung (X) geplanten Einzelbewegungen ($TE_x$) die Projektion ($S_i'$) auf die erste Bewegungsrichtung (X) erreicht und ein Kollisionszeitpunkt ($t_{iy}$) ermittelt wird, zu dem die Last (8) mit der für die zweite Bewegungsrichtung (Y) geplanten Einzelbewegung ($TE_y$) die Projektion ($S_i''$) auf die zweite Bewegungsrichtung (Y) erreicht, **und dass** die ermittelten Kollisionszeitpunkte ($t_{ix}$, $t_{iy}$) miteinander verglichen werden.

9. Verfahren nach Anspruch 7, **dadurch gekennzeichnet, dass** zur Überprüfung, ob die zu erwartende Umplanungstrajektorie (TU) zu einer Kollision der Last (8) mit einem im Arbeitsbereich (15) vorgegebenen Hindernis (11) führt, eine Projektion ($S_i'$, $S_i''$) eines vom vorgegebenen Hindernis (11) abgeleiteten Stützpunktes ($S_i$) auf eine der Bewegungsrichtungen (X, Y) ermittelt wird, **dass** ein Kollisionszeitpunkt ($t_{ix}$, $t_{iy}$) ermittelt wird, zu dem die Last (8) mit der für diese Bewegungsrichtung (X, Y) geplanten Einzelbewegung ($TE_x$, $TE_y$) die ermittelte Projektion ($S_i'$, $S_i''$) erreicht, **dass** eine Position ($s_x(t_{ix})$, $s_y(t_{iy})$) der Last (8) auf der anderen Bewegungsrichtung (X,Y) ermittelt wird, welche von der Last (8) zum ermittelten Kollisionszeitpunkt ($t_{iy}$, $t_{iy}$) angenommen wird, **und dass** die ermittelte Position ($s_x(t_{ix})$, $s_y(t_{iy})$) mit einer Projektion ($S_i'$, $S_i''$) des Stützpunktes ($S_i$) auf jene Bewegungsrichtung (X, Y), für die die Position ($s_x(t_{ix})$, $s_y(t_{iy})$) der Last (8) ermittelt wurde, verglichen wird.

10. Verfahren nach Anspruch 8 oder 9, **dadurch gekennzeichnet, dass** die Kollisionszeitpunkte ($t_{ix}$, $t_{iy}$) mit einem Verfahren zur Nullstellensuche ermittelt werden.

11. Verfahren nach einem der Ansprüche 8 bis 10, **dadurch gekennzeichnet, dass** im Fall einer ermittelten Kollision mit einem Hindernis (11) die zumindest eine Einzelbewegung ($TE_X$, $TE_Y$) nicht durchgeführt wird **und dass** stattdessen entlang jener Bewegungsrichtung (X, Y), für welche die zumindest eine nicht durchgeführte Einzelbewegung ($TE_X$, $TE_Y$) geplant worden ist, für zumindest die Dauer einer vorgegebenen Minimalbremszeit (Tst) ein vorgegebener Bremsvorgang durchgeführt wird.

12. Verfahren nach Anspruch 11, **dadurch gekennzeichnet, dass** anstelle der zumindest einen nicht durchgeführten Einzelbewegung ($TE_X$, $TE_Y$) für die entsprechende Bewegungsrichtung (X,Y) eine neue Einzelbewegung ($TE_{X,n}$, $TE_{Y,n}$) geplant wird, **dass** überprüft wird, ob die sich aus der neu geplanten Einzelbewegungen ($TE_{X,n}$, $TE_{Y,n}$) ergebende Umplanungstrajektorie (TU) zu einer Kollision der Last (8) mit einem im Arbeitsbereich (15) vorgegebenen Hindernis (11) führt, **und dass** die neue Einzelbewegung ($TE_{X,n}$, $TE_{Y,n}$) durchgeführt wird, wenn keine Kollision erkannt wird, oder **dass** der vorgegebene Bremsvorgang für zumindest eine weitere Minimalbremszeit (Tst) fortgesetzt wird und erneut eine Neuplanung einer Einzelbewegung ($TE_{X,n}$, $TE_{Y,n}$) sowie eine Überprüfung der Umplanungstrajektorie (TU), welche sich durch die neu geplante Einzelbewegung ($TE_{X,n}$, $TE_{Y,n}$) ergibt, durchgeführt werden, falls eine erneute Kollision mit einem Hindernis (11) erkannt wird.

13. Verfahren nach einem der vorhergehenden Ansprüche, **dadurch gekennzeichnet, dass** die Position (Pz) der Last (8) messtechnisch erfasst wird und zur Planung und/oder Durchführung der Einzelbewegungen ($TE_X$, $TE_Y$) verwendet wird.

14. Verfahren nach einem der vorhergehenden Ansprüche, **dadurch gekennzeichnet, dass** die Last (8) durch die Hebeeinrichtung (1) zusätzlich entlang einer dritten Bewegungsrichtung (Z) bewegt wird, wobei die Last (8) innerhalb eines vorgegebenen 3D-Arbeitsraumes gemäß einer dreidimensionalen Trajektorie (T) bewegt wird, **und dass** zur Umplanung der Trajektorie (T) auch für die dritte Bewegungsrichtung (Z) zumindest eine Einzelbewegung (TEz) geplant wird und gemäß einer vorgegebenen Bewegungsabfolge zusätzlich zu den für die erste Bewegungsrichtung (X) und für die zweite Bewegungsrichtung (Y) geplanten Einzelbewegungen (TE$_X$, TE$_Y$) ausgeführt wird.

15. Hebeeinrichtung (1) zum Bewegen einer Last (8) von einem Anfangspunkt (A) zu einem Endpunkt (E) gemäß einer vorgegebenen Trajektorie (T) innerhalb eines vorgegebenen Arbeitsbereichs (15) der Hebeeinrichtung (1), wobei in der Hebeeinrichtung (1) ein Lastaufnahmeelement (7) zur Aufnahme der Last (8) vorgesehen ist, das mit zumindest einem Halteelement (6) mit einem Laufelement (5) verbunden ist, wobei das Laufelement (5) mittels eines Laufelementantriebs entlang einer ersten Bewegungsrichtung (X) bewegbar ist und das Lastaufnahmeelement (7) mittels eines Hubantriebs entlang einer zweiten Bewegungsrichtung (Y) bewegbar ist, **dadurch gekennzeichnet, dass** in der Hebeeinrichtung (1) eine Recheneinheit (12) vorgesehen ist, welche ausgestaltet ist, zu einem Kommandozeitpunkt (t$_k$) während der Bewegung der Last (8) einen im Arbeitsbereich (15) vorgegebenen, neuen Endpunkt (E$_n$) zur Umplanung der Trajektorie (T) einzulesen, **dass** die Recheneinheit (12) weiters ausgestaltet ist, unter Berücksichtigung von vorgegebenen kinematischen Beschränkungen der Hebeeinrichtung (1) für die erste Bewegungsrichtung (X) sowie für die zweite Bewegungsrichtung (Y) jeweils eine Einzelbewegung (TE$_x$, TE$_y$) zu planen, welche die weitere Bewegung der Last (8) entlang der jeweiligen Bewegungsrichtung (X, Y) ab dem Kommandozeitpunkt (t$_k$) definieren, wobei die Einzelbewegungen (TE$_X$, TE$_Y$) jeweils in einer Projektion (E$_n$', E$_n$") des neuen Endpunktes (E$_n$) auf die jeweilige Bewegungsrichtung (X, Y) enden, **und dass** die Recheneinheit (12) ausgestaltet ist, den Laufelementantrieb und den Hubantrieb der Hebeeinrichtung (1) zu steuern, um die geplanten Einzelbewegungen (TE) entsprechend einer vorgegebenen Bewegungsabfolge auszuführen und damit die Last (8) entlang der ersten Bewegungsrichtung (X) sowie entlang der zweiten Bewegungsrichtung (Y) gemäß einer sich aus der Bewegungsabfolge der geplanten Einzelbewegungen (TE) ergebenden Umplanungstrajektorie (TU) weiterzubewegen.

## Claims

1. A method for controlling a lifting device (1) which moves a load (8) along a first movement direction (X) and along a second movement direction (Y) within a specified working area (15) of the lifting device (1) in accordance with a specified trajectory (T) from a starting point (A) to an end point (E), **characterized in that** at a command time point (t$_k$) during the movement of the load (8), the end point (E) is changed to a new end point (E$_n$), **in that,** taking into account specified kinematic constraints of the lifting device (1), an individual movement (TE$_X$, TE$_Y$) is planned for the first movement direction (X) and for the second movement direction (Y) respectively, which individual movement determines the further movement of the load (8) along the respective movement direction (X, Y) from the command time point (t$_k$) onwards, wherein the individual movements (TE$_X$, TE$_Y$) each end in a projection (E$_n$', E$_n$") of the new end point (E$_n$) onto the respective movement direction (X, Y), **and in that** the planned individual movements (TE$_X$, TE$_Y$) are executed in accordance with a specified movement sequence in order to move the load (8) further along the first movement direction (X) and further along the second movement direction (Y) in accordance with a replanning trajectory (TU) resulting from the movement sequence of the planned individual movements (TE$_X$, TE$_Y$).

2. The method according to claim 1, **characterized in that** the individual movements (TE$_X$, TE$_Y$) planned for the first movement direction (X) and for the second movement direction (Y) are planned as individual movements (TE$_X$, TE$_Y$) that are independent of one another.

3. The method according to any of claims 1 to 2, **characterized in that** the planned individual movements (TE$_X$, TE$_Y$) each comprise a position profile (s$_x$(t), s$_y$(t)) that can be continuously differentiated at least four times in time, the position profiles (s$_x$(t), s$_y$(t)) for generating the temporally at least four times continuous differentiability being filtered by means of a filter (F) with a specifiable time constant, the time constant of the filter (F) being selected as a function of the geometry of the lifting device (1) in order to comply with the specified kinematic constraints of the lifting device (1) in a combined execution of the individual movements (TE$_X$, TE$_Y$).

4. The method according to any of claims 1 to 3, **characterized in that,** in the case of an obstacle (11) located between the position (Pz) taken on by the load (8) at the command time point (t$_k$) and the new end point (E$_n$), a further individual movement (TE$_{Y2}$) is planned for the second movement direction (Y) which (11) in combination with the individual movement (TE$_X$) planned along the first movement direction (X) moves the load (8) around the obstacle, **and in that** the second individual movement (TE$_{Y2}$) is executed in accordance with the specified movement sequence before the individual movement (TE$_Y$) already planned for the second movement direction (Y).

5. The method according to any of the preceding claims, **characterized in that** the movement sequence is specified such that individual movements ($TE_X$) along the first movement direction (X) and individual movements ($TE_Y$) along the second movement direction (Y) are started alternately.

6. The method according to any of the preceding claims, **characterized in that** the movement sequence is specified such that an individual movement ($TE_X$) along the first movement direction (X) and an individual movement ($TE_Y$) along the second movement direction (Y) are executed overlapping in time.

7. The method according to any of the preceding claims, **characterized in that,** before the execution of at least one planned individual movement ($TE_X$, $TE_Y$), it is checked whether the expected replanning trajectory (TU) leads to a collision of the load (8) with an obstacle (11) specified in the working area (15).

8. The method according to claim 7, **characterized in that,** in order to check whether the expected replanning trajectory (TU) leads to a collision of the load (8) with an obstacle (11) specified in the working area (15), projections ($S_i'$, $S_i''$) of a keypoint (Si) derived from the specified obstacle (11) onto the movement directions (X, Y) are determined, **in that** a collision time ($t_{ix}$) is determined at which the load (8) reaches the projection ($S_i'$) onto the first movement direction (X) with the individual movement ($TE_x$) planned for the first movement direction (X), and a collision time ($t_{iy}$) is determined at which the load (8) reaches the projection (Si") onto the second movement direction (Y) with the individual movement ($TE_y$) planned for the second movement direction (Y), **and in that** the determined collision times ($t_{ix}$, $t_{iy}$) are compared with one another.

9. The method according to claim 7, **characterized in that,** in order to check whether the expected replanning trajectory (TU) leads to a collision of the load (8) with an obstacle (11) specified in the working area (15), a projection ($S_i'$, $S_i''$) of a keypoint (Si) derived from the specified obstacle (11) onto one of the movement directions (X, Y) is determined, **in that** a collision time ($t_{ix}$, $t_{iy}$) is determined at which the load (8) reaches the determined projection ($S_i'$, $S_i''$) with the individual movement ($TE_x$, $TE_y$) planned for this movement direction (X, Y), **in that** a position ($s_x(t_{ix})$, $s_y(t_{iy})$) of the load (8) on the other movement direction (X, Y) take on by the load (8) at the determined collision time ($t_{iy}$, $t_{iy}$) is determined, **and in that** the determined position ($s_x(t_{ix})$, $s_y(t_{iy})$) is compared with a projection ($S_i'$, $S_i''$) of the keypoint (Si) onto the movement direction (X, Y) for which the position ($s_x(t_{ix})$, $s_y(t_{iy})$) of the load (8) was determined.

10. The method according to claim 8 or 9, **characterized in that** the collision times ($t_{ix}$, $t_{iy}$) are determined using a root finding method.

11. The method according to any of claims 8 to 10, **characterized in that,** in the event of a determined collision with an obstacle (11), the at least one individual movement ($TE_X$, $TE_Y$) is not performed, **and in that** instead a specified braking operation is performed for at least the duration of a specified minimum braking time (Tst) along that movement direction (X, Y) for which the at least one individual movement ($TE_X$, $TE_Y$) that was not executed had been planned.

12. The method according to claim 11, **characterized in that** instead of the at least one individual movement ($TE_X$, $TE_Y$) which has not been performed, a new individual movement ($TE_{X,n}$, $TE_{Y,n}$) is planned for the corresponding movement direction (X, Y), **in that** it is checked whether the replanning trajectory (TU) resulting from the newly planned individual movement ($TE_{X,n}$, $TE_{Y,n}$) leads to a collision of the load (8) with an obstacle (11) specified in the working area (15), **and in that** the new individual movement ($TE_{X,n}$, $TE_{Y,n}$) is performed if no collision is detected, or **in that** the specified braking operation is continued for at least one further minimum braking time (Tst) and a replanning of an individual movement ($TE_{X,n}$, $TE_{Y,n}$) and a check of the replanning trajectory (TU) resulting from the replanned individual movement ($TE_{X,n}$, $TE_{Y,n}$) are performed again if a new collision with an obstacle (11) is detected.

13. The method according to any of the preceding claims, **characterized in that** the position (Pz) of the load (8) is measured and is used for planning and/or executing the individual movements ($TE_X$, $TE_Y$).

14. The method according to any of the preceding claims, **characterized in that** the load (8) is additionally moved along a third movement direction (Z) by the lifting device (1), wherein the load (8) is moved within a specified 3D working space in accordance with a three-dimensional trajectory (T) **and in that,** for replanning the trajectory (T), at least one individual movement (TEz) is also planned for the third movement direction (Z) and is executed in accordance with a specified movement sequence in addition to the individual movements ($TE_X$, $TE_Y$) planned for the first movement direction (X) and for the second movement direction (Y).

**15.** A lifting device (1) for moving a load (8) from a starting point (A) to an end point (E) in accordance with a specified trajectory (T) within a specified working area (15) of the lifting device (1), wherein a load receiving element (7) is provided in the lifting device (1) for receiving the load (8) which is connected by at least one retaining element (6) to a running element (5), wherein the running element (5) is movable along a first movement direction (X) by means of a running element drive and the load receiving element (7) is movable along a second movement direction (Y) by means of a lifting drive, **characterized in that** a computing unit (12) is provided in the lifting device (1), which is designed to read in at a command time point ($t_k$) during the movement of the load (8) a new end point ($E_n$) specified in the working area (15) for replanning the trajectory (T), **in that** the computing unit (12) is further configured to plan a respective individual movement ($TE_X$, $TE_Y$) for the first movement direction (X) and for the second movement direction (Y), taking into account specified kinematic constraints of the lifting device (1), which define the further movement of the load (8) along the respective direction of movement (X, Y) from the command time point ($t_k$), wherein the individual movements ($TE_X$, $TE_Y$) each end in a projection ($E_n'$, $E_n''$) of the new end point ($E_n$) onto the respective direction of movement (X, Y), **and in that** the computing unit (12) is configured to control the running element drive and the lifting drive of the lifting device (1) in order to execute the planned individual movements (TE) in accordance with a specified movement sequence and thus to move the load (8) further along the first movement direction (X) and along the second movement direction (Y) in accordance with a replanning trajectory (TU) resulting from the movement sequence of the planned individual movements (TE).

## Revendications

**1.** Procédé permettant la commande d'un dispositif de levage (1) qui déplace une charge (8) le long d'une première direction de déplacement (X) et le long d'une deuxième direction de déplacement (Y) à l'intérieur d'une zone de travail (15) prédéterminée du dispositif de levage (1) selon une trajectoire (T) prédéterminée à partir d'un point de départ (A) jusqu'à un point d'arrivée (E), **caractérisé en ce que,** à un moment d'instruction ($t_k$) pendant le déplacement de la charge (8), le point d'arrivée (E) est modifié en un nouveau point d'arrivée ($E_n$), **en ce que,** en tenant compte de restrictions cinématiques prédéterminées du dispositif de levage (1), respectivement un déplacement individuel ($TE_X$, $TE_Y$) est planifié pour la première direction de déplacement (X) et pour la deuxième direction de déplacement (Y), lesquels définissent le déplacement supplémentaire de la charge (8) le long de la direction de déplacement (X, Y) respective à partir du moment d'instruction ($t_k$), dans lequel les déplacements individuels ($TE_X$, $TE_Y$) se terminent respectivement dans une projection ($E_n'$, $E_n''$) du nouveau point d'arrivée ($E_n$) sur la direction de déplacement (X, Y) respective, **et en ce que** les déplacements individuels ($TE_X$, $TE_Y$) planifiés sont exécutés conformément à une séquence de déplacements prédéterminée afin de faire progresser le déplacement de la charge (8) le long de la première direction de déplacement (X) et le long de la deuxième direction de déplacement (Y) selon une trajectoire de replanification (TU) résultant de la séquence de déplacements des déplacements individuels ($TE_X$, $TE_Y$) planifiés.

**2.** Procédé selon la revendication 1, **caractérisé en ce que** les déplacements individuels ($TE_X$, $TE_Y$) planifiés pour la première direction de déplacement (X) et les déplacements individuels planifiés pour la deuxième direction de déplacement (Y) sont planifiés en tant que déplacements individuels ($TE_X$, $TE_Y$) indépendants les uns des autres.

**3.** Procédé selon l'une des revendications 1 à 2, **caractérisé en ce que** les déplacements individuels ($TE_X$, $TE_Y$) planifiés comprennent respectivement une courbe de position ($s_x(t)$, $s_y(t)$) pouvant être différenciée de manière continue au moins quatre fois dans le temps, dans lequel les courbes de position ($s_x(t)$, $s_y(t)$) sont filtrées pour la génération de la différentiabilité continue au moins quatre fois dans le temps au moyen d'un filtre (F) comportant une constante de temps pouvant être prédéterminée, dans lequel la constante de temps du filtre (F) est choisie en fonction de la géométrie du dispositif de levage (1) afin de respecter les restrictions cinématiques prédéterminées du dispositif de levage (1) lors d'une exécution combinée des déplacements individuels ($TE_X$, $TE_Y$).

**4.** Procédé selon l'une des revendications 1 à 3, **caractérisé en ce que,** dans le cas d'un obstacle (11) qui est disposé entre la position (Pz) adoptée par la charge (8) au moment d'instruction ($t_k$) et le nouveau point d'arrivée ($E_n$), un déplacement individuel ($TE_{Y2}$) supplémentaire est planifié pour la deuxième direction de déplacement (Y), lequel déplace la charge (8) autour de l'obstacle (11) en combinaison avec le déplacement individuel ($TE_X$) planifié le long de la première direction de déplacement (X), **et en ce que** le deuxième déplacement individuel ($TE_{Y2}$) est exécuté, conformément à la séquence de déplacements prédéterminée, avant le déplacement individuel ($TE_Y$) déjà planifié pour la deuxième direction de déplacement (Y).

**5.** Procédé selon l'une des revendications précédentes,

EP 4 186 847 B1

**caractérisé en ce que** la séquence de déplacements est prédéterminée de sorte que des déplacements individuels ($TE_X$) le long de la première direction de déplacement (X) et des déplacements individuels ($TE_Y$) le long de la deuxième direction de déplacement (Y) sont initiés en alternance.

6.  Procédé selon l'une des revendications précédentes,
    **caractérisé en ce que** la séquence de déplacements est prédéterminée de sorte qu'un déplacement individuel ($TE_X$) le long de la première direction de déplacement (X) et un déplacement individuel ($TE_Y$) le long de la deuxième direction de déplacement (Y) sont réalisés de manière à se chevaucher dans le temps.

7.  Procédé selon l'une des revendications précédentes,
    **caractérisé en ce que,** avant l'exécution d'au moins un déplacement individuel ($TE_X$, $TE_Y$) planifié, on vérifie si la trajectoire de replanification (TU) attendue conduit ou non à une collision de la charge (8) avec un obstacle (11) prédéterminé dans la zone de travail (15).

8.  Procédé selon la revendication 7, **caractérisé en ce que,** pour vérifier si la trajectoire de replanification (TU) attendue conduit ou non à une collision de la charge (8) avec un obstacle (11) prédéterminé dans la zone de travail (15), des projections ($S_i'$, $S_i''$) d'un point de repère (Si) dérivé de l'obstacle (11) prédéterminé sont spécifiées sur les directions de déplacement (X, Y), **en ce qu'**un moment de collision ($t_{ix}$) est spécifié, auquel la charge (8) atteint la projection ($S_i'$) sur la première direction de déplacement (X) avec les déplacements individuels ($TE_x$) planifiés pour la première direction de déplacement (X), et un moment de collision ($t_{iy}$) est spécifié, auque la charge (8) atteint la projection ($S_i''$) sur la deuxième direction de déplacement (Y) avec le déplacement individuel ($TE_y$) planifié pour la deuxième direction de déplacement (Y), **et en ce que** les moments de collision ($t_{ix}$, $t_{iy}$) spécifiés sont comparés entre eux.

9.  Procédé selon la revendication 7, **caractérisé en ce que,** pour vérifier si la trajectoire de replanification (TU) attendue conduit ou non à une collision de la charge (8) avec un obstacle (11) prédéterminé dans la zone de travail (15), une projection ($S_i'$, $S_i''$) d'un point de repère (Si) dérivé de l'obstacle (11) prédéterminé est spécifiée sur l'une des directions de déplacement (X, Y), **en ce qu'**un moment de collision ($t_{ix}$, $t_{iy}$) est spécifié, auquel la charge (8) atteint la projection ($S_i'$, $S_i''$) spécifiée avec le déplacement individuel ($TE_x$, $TE_y$) planifié pour ladite direction de déplacement (X, Y), **en ce qu'**une position ($s_x(t_{ix})$, $s_y(t_{iy})$) de la charge (8) est spécifiée sur l'autre direction de déplacement (X, Y), laquelle position est adoptée par la charge (8) pour le moment de collision ($t_{iy}$, $t_{iy}$) spécifié, **et en ce que** la position ($s_x(t_{ix})$, $s_y(t_{iy})$) spécifiée est comparée avec une projection ($S_i'$, $S_i''$) du point de repère (Si) sur ladite direction de déplacement (X, Y) pour laquelle la position ($s_x(t_{ix})$, $s_y(t_{iy})$) de la charge (8) a été spécifiée.

10. Procédé selon la revendication 8 ou 9, **caractérisé en ce que** les moments de collision ($t_{ix}$, $t_{iy}$) sont spécifiés par un procédé permettant la recherche de zéros.

11. Procédé selon l'une des revendications 8 à 10, **caractérisé en ce que,** dans le cas d'une collision spécifiée avec un obstacle (11), l'au moins un déplacement individuel ($TE_X$, $TE_Y$) n'est pas réalisé, **et en ce qu'**au lieu de cela, le long de ladite direction de déplacement (X, Y) pour laquelle l'au moins un déplacement individuel ($TE_X$, $TE_Y$) non réalisé a été planifié, un processus de freinage prédéterminé est réalisé pendant au moins la durée d'un temps de freinage minimal (Tst) prédéterminé.

12. Procédé selon la revendication 11, **caractérisé en ce que,** à la place de l'au moins un déplacement individuel ($TE_X$, $TE_Y$) non réalisé, un nouveau déplacement individuel ($TE_{X,n}$, $TE_{Y,n}$) est planifié pour la direction de déplacement (X, Y) correspondante, **en ce qu'**on vérifie si la trajectoire de replanification (TU) résultant des nouveaux déplacements individuels ($TE_{X,n}$, $TE_{Y,n}$) planifié conduit ou non à une collision de la charge (8) avec un obstacle (11) prédéterminé dans la zone de travail (15), **et en ce que** le nouveau déplacement individuel ($TE_{X,n}$, $TE_{Y,n}$) est réalisé si aucune collision n'est reconnue, **ou en ce que** le processus de freinage prédéterminé est maintenu pendant au moins un temps de freinage minimal (Tst) supplémentaire et une nouvelle planification d'un déplacement individuel ($TE_{X,n}$, $TE_{Y,n}$) ainsi qu'une vérification de la trajectoire de replanification (TU), laquelle trajectoire de replanification résulte du nouveau déplacement individuel ($TE_{X,n}$, $TE_{Y,n}$) planifié, sont à nouveau réalisées si une nouvelle collision avec un obstacle (11) est reconnue.

13. Procédé selon l'une des revendications précédentes,
    **caractérisé en ce que** la position (Pz) de la charge (8) est détectée par une technique de mesure et est utilisée pour la planification et/ou la réalisation des déplacements individuels ($TE_X$, $TE_Y$).

14. Procédé selon l'une des revendications précédentes,

**caractérisé en ce que** la charge (8) est en outre déplacée le long d'une troisième direction de déplacement (Z) par le dispositif de levage (1), dans lequel la charge (8) est déplacée selon une trajectoire (T) tridimensionnelle à l'intérieur d'un espace de travail 3D prédéterminé, **et en ce que,** pour la replanification de la trajectoire (T), au moins un déplacement individuel (TEz) est également planifié pour la troisième direction de déplacement (Z) et est exécuté selon une séquence de déplacements prédéterminée outre les déplacements individuels (TE$_X$, TE$_Y$) planifiés pour la première direction de déplacement (X) et pour la deuxième direction de déplacement (Y).

15. Dispositif de levage (1) permettant le déplacement d'une charge (8) à partir d'un point de départ (A) jusqu'à un point d'arrivée (E) selon une trajectoire (T) prédéterminée à l'intérieur d'une zone de travail (15) prédéterminée du dispositif de levage (1), dans lequel un élément de réception de charge (7) est prévu dans le dispositif de levage (1) pour la réception de la charge (8), lequel élément de réception de charge est relié à un élément de roulement (5) par au moins un élément de retenue (6), dans lequel l'élément de roulement (5) peut être déplacé le long d'une première direction de déplacement (X) au moyen d'un entraînement d'élément de roulement et l'élément de réception de charge (7) peut être déplacé le long d'une deuxième direction de déplacement (Y) au moyen d'un entraînement de levage, **caractérisé en ce qu'**une unité de calcul (12) est prévue dans le dispositif de levage (1), laquelle est configurée pour lire, à un moment d'instruction ($t_k$) pendant le déplacement de la charge (8), un nouveau point d'arrivée (E$_n$) prédéterminé dans la zone de travail (15) pour la replanification de la trajectoire (T), **en ce que** l'unité de calcul (12) est en outre configurée pour planifier, en tenant compte de restrictions cinématiques prédéterminées du dispositif de levage (1), respectivement un déplacement individuel (TE$_x$, TE$_y$) pour la première direction de déplacement (X) ainsi que pour la deuxième direction de déplacement (Y), lesquels déplacements individuels définissent le déplacement supplémentaire de la charge (8) le long de la direction de déplacement (X, Y) respective à partir du moment d'instruction ($t_k$), dans lequel les déplacements individuels (TE$_X$, TE$_Y$) se terminent respectivement dans une projection (E$_n$', E$_n$") du nouveau point d'arrivée (E$_n$) sur la direction de déplacement (X, Y) respective, **et en ce que** l'unité de calcul (12) est configurée pour commander l'entraînement d'élément de roulement et l'entraînement de levage du dispositif de levage (1) afin d'exécuter les déplacements individuels (TE) planifiés conformément à une séquence de déplacements prédéterminée et de faire ainsi progresser le déplacement de la charge (8) le long de la première direction de déplacement (X) ainsi que le long de la deuxième direction de déplacement (Y) selon une trajectoire de replanification (TU) résultant de la séquence de déplacements des déplacements individuels (TE) planifiés.

Fig. 1

Fig. 2a

Fig. 2b

Fig. 2c

EP 4 186 847 B1

Fig. 3a

Fig. 3b

Fig. 4

Fig. 5a

Fig. 5b

Fig. 5c

Fig. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20070289931 A1
- EP 3461783 B1
- CN 111170153 A
- EP 3653562 A1